(19) Europäisches Patentamt
European Patent Office
Office européen des brevets

(11) Veröffentlichungsnummer: **0 210 478 B1**

# (12) EUROPÄISCHE PATENTSCHRIFT

(45) Veröffentlichungstag der Patentschrift: **02.10.91**

(51) Int. Cl.5: **C08G 18/08**, C08G 18/10, C08J 9/00, C02F 3/10, B01J 20/28, C12N 11/08

(21) Anmeldenummer: **86109278.1**

(22) Anmeldetag: **08.07.86**

## (54) Verfahren zur Herstellung füllstoffhaltiger, anionisch modifizierter Polyurethan(harnstoff)-Massen, entsprechende Polyurethan(harnstoff)-Massen und ihre Verwendung.

(30) Priorität: **23.07.85 DE 3526185**

(43) Veröffentlichungstag der Anmeldung:
**04.02.87 Patentblatt 87/06**

(45) Bekanntmachung des Hinweises auf die Patenterteilung:
**02.10.91 Patentblatt 91/40**

(84) Benannte Vertragsstaaten:
**AT BE CH DE FR GB IT LI NL SE**

(56) Entgegenhaltungen:
**EP-A- 151 938**
**EP-A- 0 092 159**
**EP-A- 0 150 747**
**EP-A-15 193 7**

(73) Patentinhaber: **BAYER AG**

**W-5090 Leverkusen 1 Bayerwerk(DE)**

(72) Erfinder: **Reischl, Artur, Dr.**
**H.T.-von-Böttinger-Strasse 19**
**W-5090 Leverkusen(DE)**
Erfinder: **Mack, Kurt, Dr.**
**Claudiusweg 15**
**W-5600 Wuppertal 1(DE)**

EP 0 210 478 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zur Herstellung von (vorgefertigte) Schaumstoffe, insbesondere in stückiger Form, und/oder Füllstoffe auf Basis von Lignozellulosen wie Braunkohle oder Torf, und oder Kohlenpulver, wie Aktivkohle, Braunkohlenkoks, sowie gegebenenfalls weitere Füllstoffe auf organischer, anorganischer oder Metallpulver-Basis enthaltenden, stückigen oder flächigen, die Füllstoffe abriebfest gebunden enthaltenden, anionisch modifizierten, Polyurethan(harnstoff)-Massen mit einem sehr hohen Wasseraufnahmefähigkeitswert (WAF). Die Herstellung erfolgt durch Umsatz von (gegebenenfalls anionisch modifizierten) NCO-Prepolymeren einer Funktionalität von mehr als 2,1, mit einer weit überstöchiometrischen Menge an Wasser, gegebenenfalls anionische Gruppen aufweisenden Kettenverlängerungsmitteln und in Gegenwart von zerkleinerten, vorgefertigten Schaumstoffen (bevorzugt), insbesondere PUR-Schaumstoffen, und/oder fossilen Lignozellulosen wie Braunkohlenpulver oder Torf, und/oder gegebenenfalls Kohlenpulvern wie A-Kohle oder Braunkohlenkoks, gegebenenfalls in Gegenwart von weiteren anorganischen oder organischen oder metallischen Füllstoffen, und gegebenenfalls in Gegenwart von Biomassen (lebenden Zellen, lebenden Bakterien, Enzymen), wobei der Gehalt an anionischen Gruppen 10 bis 3000 Milliäquivalente pro wasser- und füllstofffreier Polyurethan(harnstoff)-Masse beträgt und den anionisch modifizierten NCO-Prepolymeren und/oder den anionischen Gruppen aufweisenden Kettenverlängerungsmitteln entstammt. Die entsprechenden Polyurethan(harnstoff)-Massen binden mittels mindestens 5 Gew.-% an anionisch modifizierter Polyurethan(harnstoff)-Matrix bis zu 97 Gew.-% an Füllstoffen und sind von der Herstellung her bereits gequollen bzw. stark wasserhaltig. Ihr Wasseraufnahmefähigkeitswert (WAF) bei Suspendierung in Wasser beträgt 33 bis 97 Gew.-% Wasser.

Die Erfindung betrifft weiterhin die Verwendung dieser in Wasser nicht aufschwimmenden, abriebfesten, hochgefüllten, hoch wasseraufnahmefähigen, anionischen Polyurethan(harnstoff)-Massen, erhältlich nach dem beschriebenen Verfahren, als Träger für Biomassen bei der (bevorzugt biologischen) Abwasserreinigung oder biologischen Fermentationsprozessen, wobei diese Träger einen Gehalt von mehr als 5 Gew.-%, vorzugsweise mehr als 15 Gew.-% und ≦97 Gew.-% (bezogen auf den wasserfreien Gehalt an füllstoffhaltigen Polyurethanen) an Füllstoffen enthalten und hydrophile und/oder hydrophobe Polyurethan(harnstoff)e mit einem Gehalt an anionischen Gruppen in Mengen von 10 bis 3000 Milliäquivalenten pro kg Polyurethanharnstoff als die Füllstoffe bindende Matrix enthalten.

Füllstoffhaltige Polyurethane mit hoher Wasseraufnahmefähigkeit sind in Form von schleifmittelhaltigen, wasserhaltigen Polyurethangelen (Hydrogelen) aus der DE-OS 3 151 925 bekannt. Dort werden 20 bis 80 Gew.-% Schleifmittel, z.B. Aluminiumoxid, Ceroxid, Wolframdioxid, Borcarbid, Siliciumcarbid, Asbestpulver und gegebenenfalls zusätzlich Graphit, Mikroglaskugeln, Glimmer oder Kurzfasern, weiterhin gegebenenfalls Fungizide, Farbstoffe oder Farbpigmente, durch Umsetzung von hydrophilen NCO-Prepolymeren (auf Basis ≧ 30 Gew.-% Oxyethylengruppenhaltigen Polyoxyalkylenethern) mit den wäßrigen, gegebenenfalls polyaminhaltigen Schleifmittelaufschlämmungen zu elastischen Schleifmittelgelen auf Polyurethan(harnstoff)-Basis umgesetzt.

Die hydrophile Eigenschaft der Gele beruht hierbei auf der Verwendung von hydrophilen (oxyethylengruppenhaltigen) Polyetherpolyolen als Ausgangsmaterialien, die Wasser in im Polyurethan gequollener Form (Gel) enthalten.

In der DE-OS 23 47 299 und DE-OS 25 21 265 werden homogene oder durch $CO_2$ schaumartig aufgetriebene, wassergequollene Polyurethan(harnstoff)-Gele beschrieben, welche bis zu 50 Volumen-% Füllstoffe wie Silikate, Kieselsäuretypen, Aluminiumoxide, Zinnoxid, Antimontrioxid, Titandioxid, Graphit und graphierte Kohle, Retortenkohle, Ruß, pulverige Zementarten, Farbpigmente oder Fasern, sowie Zellulosepulver neben Tensiden oder Nährstoffen enthalten können. Auch hier beruht die Wasseraufnahme in den Gelen im wesentlichen in der Verwendung von hydrophilen Polyetherpolyolen mit ≧40 Gew.-% Oxyethylensequenzen.

In der DE-OS 31 03 499 werden im wesentlichen wasserfreie Polyurethangelmassen mit Polyolen als Dispersionsmittel beschrieben, welche Wirkstoffe und gegebenenfalls zusätzliche Farbstoffe, Pigmente, Fasern, anorganische Füllstoffe, Metallpulver, Aktivkohle, Zellulosepulver und Kieselsäurepräparate enthalten können. Solche polyolhaltigen Gele sind für den vorgesehenen Verwendungszweck ungeeignet, da sie in wäßriger Suspension zumindest einen großen Teil der dispergierten Polyole abgeben.

Ebenso ist die Einbettung von wachstumsfähigen Zellen in Polyurethan-Hydrogelen bekannt: siehe z.B. Tanaka et al., European Journal of Applied Microbiology and Biotechnology, 7, (1979) ab Seite 371. Auch in der DE-OS 29 29 872 wurde ein Verfahren zur Herstellung von hydrophilen, gelförmigen oder geschäumten Biokatalysatoren mit hoher Beladung an enzymatisch aktiver Substanz durch Polymereinschluß ganzer Zellen, von Zellfragmenten oder Enzymen, durch Mischen eienr wäßrigen Suspension der enzymatisch aktiven Substanz mit hydrophilen Polyisocyanaten unter Bildung eines enzymatisch hochaktiven, hydrophilen Polyurethan-Netzwerks in Blockform oder perlförmiger Form beschrieben. Auf Seite 7 der genannten Offenlegungsschrift werden zum Stand der Technik auch weitere Veröffentlichungen genannt. Auch in der DE-OS 3 312 578 werden kationische Polymere enthaltende, hydrophile PU-Gele beschrieben, die wachstumsfähige Zellen eingebaut enthalten.

In den Polyurethangelen nach dem Stand der Technik müssen zwangsläufig hydrophile Polyurethane auf der Basis von Polyethern mit hohen Ethylenoxidanteilen aufgebaut werden, um eine ausreichende Wasseraufnahmefähigkeit zu erreichen. Hierbei ergeben sich oft Reaktivitätsprobleme (der zumeist hohe Aktivitäten aufweisenden) hydrophilen Polyetherpolyole, sowie Probleme bei der mechanischen Gelfestigkeit bei Verwendung hochhydrophiler Polyetherpolyole, abgesehen von dem hohen Preis derartig aufgebauter hydrophiler Polyurethanmassen.

Es wurden auch schon eine Reihe von Verfahren zur Imprägnierung von Schaumstoffen und Schaumstoffteilchen beschrieben, indem man die Schaumstoffe mit einer Reaktivkomponente, z.B. mit Polyisocyanaten, tränkt und nachträglich der Umsetzung mit der anderen Reaktionskomponente, z.B. Wasser, Polyolen, Polyaminen oder Dämpfen von Diaminen aussetzt, beispielsweise nach Verfahren der DE-OS 3 039 146, Ja 50-103 571, FR-PS 1 587 855, FR-PS 1 574 789, DE-OS 2 131 206, US-PS 2 955 056, US-PS 3 114 772 oder US-PS 4 315 966.

Man kann auch die Schaumstoffe einer quellend wirkenden Flüssigkeit aussetzen und bringt danach die Polyurethan-Reaktionskomponenten zur Einwirkung, wodurch Verhärtungen und Versteifungen des Schaumstoffes möglich sind und gegebenenfalls Einlagerungen in der gequollenen Schaumstoff-Matrix, z.B. nach Verfahren der FR-PS 1 341 717, 1 587 855, 1 574 789 oder der DE-AS 1 911 645, erfolgen. Solche Matrix-Schaumstoffe weisen weiterhin typische Schaumstoffeigenschaften, wenn auch andere Härte, Elastizität oder chemische bzw. mechanische Eigenschaften auf.

Eine Vielzahl weiterer Patentschriften beschreibt die Verklebung bzw. die Verpressung von Schaumstoffteilchen (vorzugsweise Polyurethanweichschaumstoffabfallteilchen) mittels Polyisocyanaten, NCO-Prepolymeren und Polyolen, Polyaminen, Wasser oder anderen Reaktionspartnern, gegebenenfalls unter Zusatz von Kork, Fasern, Zellulosepulver, Flammschutzmitteln, Pigmenten, Metallpulvern oder Ruß zu neuartigen Verbundmaterialien, welche gegebenenfalls mit Überzügen oder mit Folien oder Metallplatten versehen oder damit verschweißt werden können. Derartige Verbundmaterialien werden beispielsweise als Isolier- und Dämmplatten, Auskleidungen, Matratzen oder Formkörper verwendet. Entsprechende Verfahren werden beispielsweise in den DE-OS 2 940 260, GB-PS 1 337 413, DE-OS 3 213 610, GB-PS 1 540 076, US-PS 4 254 177, DE-OS 2 908 161, DE-OS 3 120 121 und JA 57/028 180 beschrieben.

Technische Bedeutung hat bisher jedoch praktisch nur die Herstellung von Verbundblockschaum aus zerkleinertem Polyurethanschaumstoff, 10-20 Gew.-% Isocyanatverbindungen, bis etwa 10 Gew.-% Füllstoffen und geringen Mengen Wasser erlangt. Der Füllstoff besteht dabei hauptsächlich aus Farbpigmenten, um den Verbundschaum, der aus verschiedenfarbenen Schaumstoffchargen bestehen kann, eine einheitliche Färbung zu verleihen. Das bei der Herstellung des Verbundschaumstoffes verwendete Wasser bewirkt als Reaktionskomponente die Überführung der Polyisocyanatgruppen in Polyharnstoffgruppen unter Kohlendioxidentwicklung. Die Menge Wasser wird dabei so gewählt, daß sie etwa dem stöchiometrischen Bedarf der Isocyanate entspricht, höchstens aber nur in einem relativ kleinen Überschuß vorhanden ist, da sonst die Entfernung der Feuchtigkeit aus den 40-60 cm dicken Verbundblöcken Schwierigkeiten bereitet.

Erfindungsgemäß sollen jedoch hochwasseraufnahmefähige, vorgefertigte Schaumstoffe in stückiger Form und/oder fossile Lignozellulosen und/oder Kohlepulver, gegebenenfalls weitere Füllstoffe enthaltende, hochgefüllte, anionische modifizierte Polyurethanharnstoff-Massen hergestellt werden, welche in Wasser relativ stark gequollen sind und/oder in bzw. zwischen den Schaumstoff- und den Füllstoff- bzw. in den Füllstoffteilchen hohe Mengen an Wasser binden, so daß die Wasseraufnahmefähigkeitswerte (WAF) mindestens 33 Gew.-%, vorzugsweise ≥50 Gew.-% und bis 97 Gew.-%, (siehe Meßmethode) betragen, die Polyurethanmatrix einen Gehalt an anionischen Gruppen oder anionische Gruppen bildenden Gruppen von 10 bis 3000 Milliäquivalenten pro kg Polyurethanmatrix aufweist und wobei die Polyurethan(harnstoff)-Trägermassen vorzugsweise in Wasser in stückiger Form leicht und nicht verklebend suspendiert werden können. Ihre Verwendung soll vorzugsweise in Verfahren der Abwasserreinigung erfolgen. Bevorzugt sind anionische Polyurethan(harnstoff)-Massen, welche sowohl Schaumstoffe als auch Lignozellulosen (insbesondere Braunkohle) und/oder Kohlepulver enthalten und besonders bevorzugt in stückiger Form , die in etwa den Formen der eingesetzten, stückigen (PU)-Schaumstoffe entsprechen, vorliegen.

Bei der (biologischen) Abwasserreinigung wurden bereits viele Verfahren vorgeschlagen, um den Abbaueffekt zu steigern und um ein möglichst schadstofffreies, gereinigtes Wasser zu erhalten.

So wurde eine Oxidation der Schadstoffe unter erhöhter Sauerstoffzufuhr zum Belebtschlamm erprobt, weiterhin spezielle Oxidationsverfahren, wie beispielsweise eine Ozon- oder Wasserstoffperoxid-Behandlung.

Es wurde die katalytische Oxidation der Abwasserinhaltsstoffe mittelt Luft und unter Zugabe von Aktivkohle in Verbindung mit einer nachgeschalteten Fällung empfohlen (siehe z.B. DE-PS 22 39 406, DE-OS 30 25 353, A. Bauer et al., Chemie-Technik, Heft 6, Seite 3-9 (1982), K. Fischer et al., GWF-Wasser/Abwasser, Heft 2, Seite 58-64 (1981); R.E. Perrotti et al., Chemical Engineering Progress (CEP), Vol. 69 (11), 63-64 (1973), G. Wysocki et al., ZC-Chemie-Technik, 3 (6), 205-208 (1974) und 3. Bericht "Adsorptive Abwasserreinigung" (Oktober 1975) des Ausschusses Wasser und Abwasser beim VCleV.).

Die vorgenannten Verfahren erwiesen sich jedoch technisch als zu aufwendig oder zu kostspielig oder der Abbaueffekt ist noch ungenügend. Die zahlreichen Versuche, Aktivkohle in der Wasserklärtechnik zu verwenden, scheiterten bisher trotz verbesserter Abbauleistung, weil die Aktivkohle sogar in ihrer gebundenen (granulierten) Form bereits bei sehr geringen Strömungen, die wenigstens zeitweise in den Klärbecken zwingend erforderlich sind, in einer nicht tolerierbaren Menge zerrieben und ausgetragen werden. Erfolgreiche Versuche einer ausreichend wirksamen hohen Menge und starken Bindung der Aktivkohle bei gleichzeitiger Erhaltung der Bioaktivität im Klärbecken sind bisher nicht bekannt geworden.

In der DE-OS 30 32 882 (EP-A 46 900) und DE-OS 30 32 869 (EP-A 46 901) wird die Verwendung eines makroporösen Stoffes mit geringem spezifischem Gewicht (10-200 kg/$m^3$) als Trägermaterial für nitrifizierende Bakterien bei der Belebtschlammklärung beschrieben. Es handelt sich z.B. um typische Polyurethanschaumstoffe. In ähnlicher Weise werden solche Schaumstoffteilchen in einem Verfahren und einer Vorrichtung zur anaeroben biologischen Abwasserreinigung beschrieben, Zu den bereits hier erzielten verbesserten Ergebnissen siehe z.B. gwf-Wasser/Abwasser, 124, (1983), Heft 5, 233-239. Derartige Schaumstoffe schwimmen jedoch in freien Belebtschlammbecken auf und führen zu verschiedenen Störungen des Prozesses. Stückige Schaumstoffe auf (u.a.) Polyurethanbasis wurden auch in verschiedenen, speziellen Verfahren als Schüttkörperfüllung (DE-PS 28 39 872 und DE-AS 2 550 818) oder als Tropfkörpermasse (östereichische PS 248 354) für die biologische Abwasserreinigung empfohlen. Die Verwendung von relativ abriebfesten Polyurethanharnstoffschaumstoffen mit offener Zellstruktur mit einem Harnstoff-Urethanverhältnis von <5 wird in der US-PS 45 03 150 als Trägermedium für mikrobiologisch aktive Zellen beim Abwasserreinigungsverfahren beschrieben. Dort werden zum Stand der Technik eine Reihe weiterer Veröffentlichungen angeführt, welche die Verwendung von Schaumstoffen bei der biologischen Abwasserreinigung beschreiben.

In der EP-A 77 411 wird die Verwendung von PU-Schaumstoffstücken als Filtriermedium beschrieben, dessen Schmutzbeladung nach bestimmten Spülverfahren von Zeit zu Zeit zur Regenerierung des Schaumstoffs abgespült wird.

Auch die Kombination von oberflächenaktiven Feststoffen mit Mikroorganismen zur Erhöhung deren Aktivität bei Biokonversionsprozessen ist bekannt, beispielsweise wird in den DE-OS 26 33 259 und DE-OS 27 03 834 die Adsorption von Zellen an z.B. Aluminiumoxid, Bentonite und $SiO_2$ und deren nachfolgende Einbettung in Polyacrylate beschrieben. Ferner beschreibt die DE-OS 26 29 692 die Einlagerung von Zellen in photohärtbare Polyurethane, die photohärtbare Acrylat-Doppelbindungen enthalten.

Ebenso ist die Einbettung von wachstumsfähigen Zellen in Polyurethan-Hydrogelen bekannt: siehe z.B. Tanaka et al., European Journal of Applied Microbiology and Biotechnology, 7, (1979) ab Seite 371. Auch in der DE-OS 29 29 872 wurde ein Verfahren zur Herstellung von hydrophilen, gelförmigen oder geschäumten Biokatalysatoren mit hoher Beladung an enzymatisch aktiver Substanz durch Polymereinschluß ganzer Zellen von Zellfragmenten oder Enzymen, durch Mischen einer wäßrigen Suspension der enzymatisch aktiven Substanz mit hydrophilen Polyisocyanaten unter Bildung eines enzymatisch hochaktiven, hydrophilen Polyurethan-Netzwerks in Blockform oder perlförmiger Form beschrieben. Auf Seite 7 der genannten Offenlegungsschrift werden zum Stand der Technik auch weitere Veröffentlichungen genannt. Ebenso wurde durch J. Klein und M. Klug in Biotechnology Letters, Vol. 3, No. 2, Seite 65-90 (1981) die Immobilisierung von "microbial cells" in PU-Matrices wie PU-Schaumstoffen oder PU-Gelen beschrieben.

Die Herstellung von enzymatisch aktiven Substanzen enthaltenden Polyurethanen ist jedoch schwierig und schließt den Nachteil ein, daß durch die hohe Reaktionsfähigkeit der Isocyanatgruppen eine - zumindest teilweise - Abtötung von Bakterien, Zellen oder eine Inaktivierung von enzymatisch aktivem Material eintritt. In den Beispielen werden z.B. Restaktivitäten von 7 bis 48 % bestimmt. So ist es auch nicht günstig, lebende Bakterien in hydrophile Polyurethane bei der Herstellung einzubauen, um sie z.B. für die Reinigung von Abwässern einzusetzen. Die Einbaumenge solcher Bakterien ist begrenzt, ein Großteil der Bakterien wird zudem durch Isocyanatreaktionen desaktiviert und die ständige Herstellung aktiver, bakterienhaltiger Polyurethanmassen und ihre "Lebendlagerung" beinhaltet Herstellungs- und Lagerungsprobleme, um die zumeist mehrere tausend Kubikmeter fassenden Klärbecken mit der erforderlichen Menge und Konzentration an in Polymerer eingebauten Bakterien zu versorgen. Eine drastische Minderung der Wachstumsfähigkeit der Bakterien würde selbst beim örtlich direkten Einbau in der Kläranlage wegen ihrer kurzen Überlebungszeit bei der Immobilisierung im Reaktionsmedium eintreten.

Deshalb mußte nach wie vor die Aufgabe gelöst werden, für neue, wirtschaftliche und wirksame Verfahren zur verbesserten Abwasserreinigung geeignete Verfahren zur Herstellung neuartiger Trägermaterialien zu entwickeln.

Aufgabe der Erfindung ist somit auch die Bereitstellung von hochwasseraufnahmefähigen, in Wasser nicht aufschwimmenden, hochgefüllten Polyurethan-(harnstoff)massen, welche bei der biologischen Abwasserreinigung als Träger für Biomassen dienen können.

Gegenstand der Erfindung ist ein Verfahren zur Herstellung von hochwasseraufnahmefähigen, füllstoffhaltigen Polyurethan(harnstoffen) aus NCO-Prepolymeren, Füllstoffen und Wasser sowie gegebenenfalls weiteren Kettenverlängerungsmitteln, das dadurch gekennzeichnet ist, daß man

A) mehrfunktionelle, hydrophile und/- oder hydrophobe NCO-Prepolymere mit einer Gesamt-Funktionalität ≧ 2,1 und einem NCO-Gehalt von 1 bis 12 Gew.-% NCO auf der Basis von

a) zwei- und/oder mehrfunktionellen, hydrophilen und/oder hydrophoben, höhermolekularen Verbindungen mit gegenüber Isocyanaten reaktiven H-Atomen mit Molekulargewichten von 400 bis 10 000,

b) 0 bis 5 Mol pro Mol a) niedermolekularen, zwei- und/oder mehrwertigen Verbindungen des Molekulargewichts 32 bis 399 und gegenüber Isocyanaten reaktiven H-Atomen,

c) gegebenenfalls anionische Gruppen aufweisenden oder anionische Gruppen bildenden Polyurethan-Ausgangskomponenten mit mindestens einer gegenüber NCO reaktiven, aktiven Wasserstoff tragenden Gruppe und mindestens einer anionische Gruppen aufweisenden oder anionische Gruppen bildenden Gruppe,

d) molar überschüssigen Mengen, bezogen auf a) bis c), an Di- und/oder Polyisocyanaten zur teilweisen oder vollständigen Ausbildung von NCO-Prepolymeren mit NCO-Gehalten von 1 bis 12 Gew.-% NCO,

gegebenenfalls mit

B) Zusätzen von weiteren niedermolekularen Polyisocyanaten zum NCO-Prepolymer A) in Mengen bis zum halben Gewichtsanteil von A) und bis zur Ausbildung von (A + B)-Mischungen mit NCO-Gehalten ≦ 30 Gew.-% NCO,

C)

a) in überstöchiometrischen Mengen, mindestens die 0,5-fache Gewichtsmenge, bezogen auf Feststoffgehalt von A + B, and Wasser

b) gegebenenfalls in Mischung mit anionische Gruppen aufweisenden oder anionische Gruppen bildenden Verbindungen mit mindestens einer gegenüber NCO reaktiven, aktiven Wasserstoff tragenden Gruppe und mindestens einer anionischen Gruppe bzw. anionische Gruppen bildenden Gruppe, gegebenenfalls weiteren Polyaminen, wobei diese Verbindungen b) vorzugsweise bis maximal 50 Äquivalent-% der NCO-Gruppen in A/B verwendet werden.

D) mit Füllstoffen auf Basis von feinteiligen oder stückigen, vorgefertigten Schaumstoffteilchen und/oder fossilen Lignozellulosen und/oder Kohlepulvern in Mengen von 5 bis 97 Gew.-%, bezogen auf die füllstoffhaltigen Polyurethanharnstoffmassen (als Trockensubstanz)

und gegebenenfalls

E) in Gegenwart von weiteren anorganischen und/oder organischen Füllstoffen und üblichen Zusatzstoffen, Katalysatoren und Hilfsmitteln der Polyurethanchemie,

zu füllstoffhaltigen, hoch wasseraufnahmefähigen, in wäßrigem Milieu abriebfesten, stark quellfähigen, feinteiligen bzw. stückigen Polyurethan(harnstoff)-Massen mit hoher Oberfläche und einem Wert der Wasseraufnahmefähigkeit (WAF-Wert) von ≧ 33 Gew.-% bis 97 Gew.-%, bezogen auf wassergequollene, füllstoffhaltige Polyurethan(harnstoff)Suspensionen ohne überstehendes Wasser, umsetzt, wobei Art und Mengen der Komponenten A c) und C b) so gewählt sind, daß ein Gehalt an anionischen Gruppen von 10 bis 3000 Milliäquivalenten anionischer oder anionbildender Gruppen pro 1000 g wasser- und füllstofffreier Polyurethan(harnstoff)-Masse im Überschuß zu ggf. vorhandenen Kationengruppen resultiert.

Das Molekulargewicht der Komponente A b) beträgt vorzugsweise 62 bis 254. Vorzugsweise werden als Komponente A b) Di- und/oder Polyole eingesetzt.

Wasser (Komponente C a)) soll vorzugsweise zu der 2-bis 60-fachen Gewichtsmenge des Feststoffgehaltes von A + B vorhanden sein.

Der "in situ"-Einbau von Mikroorganismen in Polyurethane oder andere Kunststoffe ist, selbst unter sehr schonenden und technisch aufwendigen Bedingungen, nicht ohne wesentlichen Verlust an vermehrungsfähigen Bakterien und starker Minderung der Bioaktivität möglich. Die Herstellungsbedingungen sind dabei insbesondere hinsichtlich der Temperatur (etwa +10° C) anzupassen. Trotzdem ist dieses, an sich mögliche Verfahren, nicht bevorzugt und zumeist auch nicht notwendig, da ein Aufwachsen von Biomassen in die Schaumstoff- und Braunkohle- oder Torf-haltigen Polyurethan(harnstoff)-Trägermassen in hervorragender Weise erfolgt.

Weiterer Erfindungsgegenstand sind die nach dem beanspruchten Verfahren zugänglichen, füllstoffhaltigen, hochwasseraufnahmefähigen anionisch modifizierten Polyurethan(harnstoff)-Massen, gekennzeichnet insbesondere durch einen Füllstoffgehalt von 5 bis 97 Gew.-%, zumeist 5 bis 95 Gew.-%, vorzugsweise 50 bis 90 Gew.-%, einen anionische Gruppen oder anionische Gruppen bildenden Gehalt von 30 bis 1500 Milliäquivalenten anionischer Gruppe pro kg und einer Wasseraufnahmefähigkeit von 30 bis 97 Gew.-%, vorzugsweise ≧50 bis 95 Gew.-% Wasser, bezogen auf wassergequollene, füllstoffhaltige Polyurethan-(harnstoff)-Suspension.

Die kennzeichnenden Schaumstoff- und/oder fossilen Lignozellulosepulver (insbesondere Braunkohle)-Füllstoffe sind somit in einer anionmodifizierten Polyurethan(harnstoff)-Matrix gebunden, wobei die füllstoffhaltigen Polyurethan(harnstoffe) vorzugsweise in feinteiliger oder flockiger bzw. stückiger Form mit hoher Oberfläche und in hochwasseraufnahmefähiger bzw. wasserenthaltender Form vorliegen. Die hohe Wasseraufnahmefähigkeit entstammt insbesondere der Schaumstoff-Füllstoffstruktur und/oder den hydrophilen Lignozellulosen wie Braunkohlepulver oder Torf und nicht entscheidend dem hydrophilen oder nichthydrophilen Charakter der PUR-Matrix. Wenn auch eine hydrophile PUR-Matrix (z.B. auf ≧40 % Oxyethylengruppen enthaltender Polyetherpolyole) eine hydrophile PUR-Matrix ergibt, so sind insbesondere solche Polyurethan(harnstoff)-Massen bevorzugt, wo die PUR-Matrix auf hydrophoben Polyurethanen z.B. auf Basis von ≦20 % Oxyethylengruppen enthaltender Polyetherpolyole aufgebaut ist, wobei die Polyurethan-Matrixzusammensetzung nicht zur PU-Gel-Bildung (Gel = hydrophil gequollene PU-Matrix) führt, sondern lediglich ein besonders günstiges Gerüst für die genannten Füllstofftypen liefert.

Es war auch Aufgabe der Erfindung, hoch wasseraufnahmefähige Träger auf Basis von Polyurethanen zur Verfügung zu stellen, die abriebfest, mechanisch beständig, durch Verwendung von hohen Mengen an oberflächenaktiven Füllstoffen verbilligt und bei der Auswahl von polyurethanbildenden Ausgangskomponenten nicht an den ausschließlichen Einsatz hochhydrophiler Polyetherpolyole gebunden zu sein, die sich für verschiedene Zwecke, z.B. als Träger bei der Abwasserreinigung bzw. bei der biologischen Fermentation verwenden lassen. Weitere Aufgaben gehen aus der Beschreibung hervor.

Weiterer Gegenstand der Erfindung ist somit die Verwendung der hochgefüllten, hoch wasseraufnahmefähigen, anionisch modifizierten Polyurethan(harnstoff)-Massen, welche als Füllstoffe 5 bis 97 Gew.-%, bevorzugt ≧ 15 bis 95 Gew.-% Schaumstoffteilchen und/oder feinteilige Lignozellulosen, insbesondere Braunkohle oder Torf, oder Kohlen wie z.B. Aktivkohle oder Braunkohlenkoks, sowie gegebenenfalls weitere Füllstoffe enthalten, als Träger für inkorporierte oder bevorzugt aufwachsende Biomassen bei der Abwasserreinigung, insbesondere der biologischen Abwasserreinigung, sowie als Träger bei der biologischen Fermentation.

Gegenstand der Erfindung ist insbesondere die Verwendung von Polyurethanen als Träger für Biomassen zur (vorzugsweise biologischen) Abwasserreinigung, dadurch gekennzeichnet, daß man nach den vorbeschriebenen Verfahren erhältliche, hoch wasseraufnehmende, hochgefüllte, anionisch modifizierte Polyurethan(harnstoff)-Massen mit einem Gehalt an anionischen oder anionische Gruppen bildenden Gruppen von 10 bis 3000, vorzugsweise 30 bis 1500 und insbesondere 50 bis 750 Milliäquivalenten pro kg Polyurethanmatrix, mit einem Gehalt an Füllstoffen von mehr als 5, vorzugsweise ≧15, insbesondere ≧50 Gew.-% und einer Obergrenze von ≦97, vorzugsweise ≦95, zumeist ≦90 Gew.-% bezogen auf den wasserfreien Gehalt an füllstoffhaltigen Polyurethanen,
und mit einer Wasseraufnahmefähigkeit von mehr als 33 und bis 97 Gew.-% Wasser, vorzugsweise 50 bis 95 Gew.-% Wasser,
wobei als Füllstoffe zellige Kunststoffteilchen, bevorzugt feinteilige oder stückige Schaumstoffteilchen, insbesondere Polyurethanschaumstoffteilchen und/oder feinteilige fossile Lignozellulosen oder deren Folgeprodukte enthaltende Naturstoffe, insbesondere Braunkohlenpulver oder Koks und/oder Kohlenpulver, insbesondere Aktivkohle oder Braunkohlenkoks und/oder Korkmehl und
gegebenenfalls weitere organische oder anorganische bzw. metallische Füllstoffe eingesetzt werden
und wobei hydrophile und/oder hydrophobe Polyurethan(harnstoffe), welche anionische Gruppen oder anionische Gruppen bildende Gruppen enthalten, als die Füllstoffe bindende Matrix dienen,
als Träger für Biomassen in der Klärflüssigkeit bei der Abwasserreinigung, vorzugsweise in einer Menge von mindestens 0,5 g Träger-Trockenmasse pro Liter Klärflüssigkeit, einsetzt.

Die Verwendung der erfindungsgemäßen Massen als in Wasser gut suspendierbare, gegebenenfalls Biomassen eingebaut enthaltende Träger kann auch in Biokonversionsprozessen zur Herstellung organischer Verbindungen, als gegebenenfalls Pflanzenwuchsstoffe, Dünger oder Samen enthaltende Träger mit hohem Wasserbindevermögen für Pflanzenwachstum, ferner als Filtriermedien oder als Adsorbentien für wasserunlösliche Flüssigkeiten wie z.B. Rohöl, erfolgen.

Die Herstellung der erfindungsgemäßen, hochgefüllten, in wasser stark quellfähigen, anionischen Polyurethan(harnstoff)massen wird in bevorzugter Zusammensetzung und bevorzugtem strukturellen Aufbau

zur Erläuterung nachfolgend beschrieben. Dabei sind mehrere Faktoren und ihre Zusammenwirkung gleichzeitig von großer Bedeutung. Das bezieht sich sowohl auf die Ausgangskomponenten für die Polyurethanbildung, ihre Mengenrelation, als auch auf die Herstellungsmethoden, sowie die Art der Füllstoffe, wobei alle diese Aspekte erfindungsgemäß abgestimmt sind, damit das Ziel der Herstellung von Polyurethan(harnstoff)-Trägermassen der genannten Art, welche hohe Mengen an Füllstoffen enthalten, jedoch starke Wasseraufnahmefähigkeit, gute Abriebbeständigkeit und eine geeignete Struktur für die Verwendung bei der Abwasserreinigung besitzen, erreicht werden konnte.

A) NCO-Prepolymere

Als PUR-bildende Ausgangskomponenten für die Herstellung der NCO-Prepolymeren A) werden die an sich bekannten Ausgangskomponenten eingesetzt:

a) als höhermolekulare Polyhydroxylverbindungen mit Molekulargewichten von 400 bis 10 000, vorzugsweise 800 bis 8000, mit Schmelzpunkten unter 60 °C, werden zwei- und/oder mehrfunktionelle höhermolekulare Polyole eingesetzt, welche vorzugsweise Funktionalitäten ≧2,1, besser ≧2,5 (und bis ca. 5, vorzugsweise ≦3,5) aufweisen. Als Polyhydroxylverbindungen sind Hydroxypolyether vor den prinzipiell gleichfalls verwendbaren Hydroxypolyestern, Hydroxypolycarbonaten oder Hydroxypolylactonen sehr bevorzugt, da sie auch im Langzeitverhalten wesentlich hydrolysenstabiler als die Estergruppen aufweisenden Polyhydroxylverbindungen sind.

Für den Aufbau von hydrophilen Polyurethanen sind als Hydroxypolyether solche Polyoxyalkylenether geeignet, welche eine größere Zahl, z.B. mehr als 20 Gew.-%, jedoch weniger als 85 Gew.-% an Oxyethylen-Sequenzen enthalten. Die Oxyethylengruppen können endständig, statistisch verteilt oder bevorzugt segmentartig, oder sowohl endständige als auch segmentartig (im Inneren), in den Polyethern eingebaut sein. Die Polyoxyalkylenether können jedoch auch geringe Mengen an z.B. cycloaliphatischen oder aromatischen Gruppierungen enthalten, beispielsweise wenn sie auf cycloaliphatischen Polyolen oder aromatischen Verbindungen z.B. Dihydroxycyclohexanen oder Hydrochinon-bishydroxyethylethern oder 4,4'-Dihydroxy-diphenyl-dimethylmethan gestartet sind. Auch aus höherfunktionellen Zuckeralkoholen oder Zuckern können durch Alkoxylierung geeignete Polyole aufgebaut werden.

Es werden vorzugsweise hydrophobe Polyether zum Aufbau der PUR-Matrix verwendet, z.B. Polyoxypropylenpolyole ohne oder mit geringen (z.B. ≦20 Gew.-%) Mengen an eingebauten Oxyethylensegmenten. Überraschenderweise lassen sich auf der Basis von PUR-Schaumstoffen und/oder Braunkohle oder Torf auch hiermit hohe Wasseraufnahmefähigkeitswerte (WAF) zeigende Trägersysteme aufbauen, die zumeist sogar eine wesentlich verbesserte Langzeitbeständigkeit in wäßrigen Biokonversionsmedien aufweisen. Mit Steinkohlenstaub, Ruß oder Aktivkohle alleine werden dagegen gefüllte Polyurethane erhalten, die bedeutend geringere Wasseraufnahmefähigkeitswerte zeigen, wenn sie nicht gleichzeitig höhere Gehalte an vorgefertigten Schaumstoffen aufweisen.

Die Polyether auf Basis von Propylenoxid-Addukten sind die erfindungsgemäß bevorzugten Polyether; die Polyether können jedoch auch auf Basis anderer Alkyloxirane, z.B. Epichlorhydrin, Epoxybutane oder ihrer Mischungen mit z.B. Propylenoxid in üblicher Weise aufgebaut werden. Besonders günstig erweisen sich erfindungsgemäß auch die hydrophoben Polypropylenglykole.

Weiterhin sich auch Polyetheramine mit endständigen Aminogruppen, z.B. durch Druckaminierung der sekundären Hydroxylgruppen oder Cyanethylierung und anschließender Reduktion erhältliche Polyether mit endständigen aliphatischen Aminogruppen, oder aliphatische oder bevorzugt aromatische Polyetheramine, welche durch Alkalihydrolyse von NCO-prepolymeren entstanden sind, geeignete Ausgangsmaterialien.

Die höhermolekularen Verbindungen a) können auch bis zu 40 Gew.-% höhermolekularer Polyadditionsprodukte, z.B. aus Hydrazinhydrat und Toluylendiisocyanat, enthalten oder sogenannte Polymerpolyole darstellen, d.h. bis zu 40 Gew.-% Copolymerisate, gegebenenfalls Pfropf(co)polymerisate auf Acrylnitril-, Butadien- und (Meth)acrylesterbasis, enthalten.

b) Niedermolekulare, zwei- und/oder mehrwertige Verbindungen mit Molekulargewichten von 32 bis 399, vorzugsweise 62 bis 254, können in modifizierenden Mengen mitverwendet werden, vorzugsweise Di- und/oder Polyole oder Aminoalkohole, z.B. Ethylenglykol, 1,2-Propylenglykol, 1,4-Butandiol, 2,3-Butandiol, Neopentylglykol, 2-Methyl-propandiol-1,3, Hexandiol-1,6, Dodecandiol-1,12, besonders die relativ hydrophilen di-, tri-, tetra- und höhermolekularen Polyethylenglykole mit Molekulargewichten bis 399, aber auch Di-, Tri- und Tetrapropylenglykoldiole oder Di-, Tri- und Tetraoxymethylendiole. Als Aminoalkohole sind beispielsweise einsetzbar Bis-hydroxyethyl-amin, Bis-2-hydroxypropylamin, Aminozucker oder 2-Amino-propandiol-1,3.

Die Menge an b) ist Null bis etwa 5 Mol b) pro Mol a), d.h. der Zusatz von b) zu a) kann während der NCO-Prepolymerbildung auch unterbleiben. Trifunktionelle Polyole b) können zur Steuerung der Gesamtfunktionalität der NCO-Prepolymeren eingebaut werden.

c) Erfindungsgemäß werden beim Aufbau der hydrophilen und/oder hydrophoben Polyurethane anionische Gruppen oder anionische Gruppen bildende Gruppen im Polyurethan mitverwendet. Die Menge der einzubauenden anionischen Gruppen bzw, Anionen bildenden Gruppen beträgt 10 bis 3000 Milliäquivalente an Anionen bzw. Anionen bildenden Gruppen auf 1000 g (füllstofffreier) Feststoff-Polyurethan-Matrix. Die Obergrenze beträgt im allgemeinen 3000 Milliäquivalente pro 1000 g Feststoff PUR, da andernfalls eine Begrenzung der Langzeit-Wasser-Lagerfähigkeit sich störend bemerkbar macht. Bevorzugt werden 30 bis 1500 Milliäquivalente anionischer oder Anionen bildender Gruppierungen, besonders bevorzugt werden 50 bis 750 Milliäquivalente anionischer oder Anionen bildender Gruppen auf 1000 g Feststoff-Polyurethan eingebaut.

Als anionische Gruppen aufweisende oder anionische Gruppen bildende Polyurethankomponenten werden solche mit mindestens einer gegenüber NCO-reaktiven, aktiven Wasserstoff tragenden Gruppe, z.B. OH-, primäre oder sekundäre Aminogruppe, Hydrazidgruppe, Hydrazingruppe, Oximgruppe oder ähnliche und mindestens einer anionischen Gruppe oder anionische Gruppe bildenden Gruppe, verwendet. Als anionische Gruppe werden bevorzugt Sulfonat- bzw. Carboxylatgruppen, bzw. in äquivalenter Form einzusetzen, ihre Sulfonsäure bzw. Carbonsäure-Derivate, die gegebenenfalls anschließend mit Basen in die Sulfonat bzw. Carboxylatgruppen überführt werden. Geeignete Basen sind z.B. die Alkalihydroxide oder Alkalicarbonate, Ammoniak oder primäre/sekundäre und bevorzugt tertiäre Amine. Anionbildende Gruppen sind z.B. Anhydridgruppen oder (weniger bevorzugt) Estergruppen, die erst durch Verseifung in die freien Carbonsäuren oder Sulfonsäuren bzw. die entsprechenden Carboxylate oder Sulfonate überführt werden müssen.

Geeignete anionische Gruppen aufweisende Ausgangskomponenten sind jedoch auch Isocyanat-Carbonsäuren oder -Sulfonsäuren. Diese können bei der Prepolymerbildung direkt neben den Diisocyanaten d) mitverwendet werden.

In der Prepolymerstufe werden bevorzugt solche anionische Ausgangskomponenten c) eingesetzt, welche als NCO-reaktive Gruppen Hydroxylgruppen oder aromatische Aminogruppen aufweisen, z.B. 2,2'-Dihydroxymethyl-propionsäure, Weinsäure, Äpfelsäure, ß-Hydroxypropionsäure, Milchsäure, 4-Aminoanthranilsäure, Sulfonatgruppen tragende Diole wie z.B. $HO-CH_2-CH_2-CH(SO_3Na)-CH_2-OH$, oder Alkoxylierungsprodukte des letztgenannten Diolsulfonats mit 1-4 Mol Ethylenoxid und/oder Propylenoxid.

Der Einbau von Amino- oder Polyamino-Sulfonaten- bzw. -Carboxylat-Verbindungen erfolgt i.a, nicht in der Prepolymerstufe, sondern bevorzugt simultan in der Kettenverlängerungsstufe (bei der Umsetzung mit Wasser).

Weitere geeignete Verbindungen, die zur Salzbildung befähigte Carbonsäuren und Hydroxylgruppen aufweisen sind z.B. Glykolsäure, Schleimsäure, Glycerin-Borsäure, Salicylsäure, Hydrochinon-2,5-dicarbonsäure, p-Hydroxyisophthalsäure, 4,6-Dihydroxyisophthalsäure oder 2,8-Dihydroxynaphtholsäure und Dimethylolpropionsäure.

Die Einführung der Aniongruppen erfolgt zumeist durch Umsetzung der entsprechenden Salze der anionischen Gruppen erfordernden Reaktivkomponenten beispielsweise von Sulfonaten oder Carboxylaten in Mischung mit dem Polyol a) in der Umsetzung mit den Polyisocyanaten d), gegebenenfalls unter Zusatz von etwas Wasser. Es ist aber auch möglich freie Säuren wie z.B. Dimethylolpropionsäure in das Prepolymer einzubauen. Eine Salzbildung kann dann durch Zugabe von wäßrigem Alkali, Alkalicarbonaten oder Aminen bei der anschließenden Kettenverlängerungsreaktion zum hochmolekularen Polyurethanharnstoff erfolgen.

Zum Einbau in das NCO-Prepolymer können auch alkoxylierte Diolsulfonate mitverwendet werden, z.B. solche der Formel

$$H-(O-\underset{\displaystyle R}{\underset{|}{CH}}-CH_2)_n-O-CH_2-\underset{\displaystyle SO_3Na}{\underset{|}{CH}}-CH_2-CH_2-O(CH_2-\underset{\displaystyle R}{\underset{|}{CH}}-O)_n-H$$

wobei R = H oder Methyl und n ganze Zahlen von 1 bis 4 bedeutet.

Das alkoxylierte Diolsulfonatsalz ist löslich in Polyol.

Die angeführten anionischen Polyurethanbausteine können, gelöst in inerten organischen Lösungsmitteln, gegebenenfalls unter Mitverwendung von etwas Wasser, der Prepolymerbildung zugeführt werden, Die Überführung in die Salzform kann aus der freien Säure oder auch aus den anionbildenden Gruppen wie Estern erst durch nachträgliche Behandlung mit z.B. Alkalihydroxiden oder Aminen erfolgen.

Weitere anionische Polyurethanausgangskomponenten werden anschließend unter C) noch genannt, da sie weniger gut in der NCO-Prepolymerstufe als in der Kettenverlängerungsstufe eingesetzt werden.

Es ist nicht zwingend notwendig, bereits das NCO-Prepolymere anionisch zu modifizieren. Die anionische Modifizierung kann auch in der Kettenverlängerungsreaktion durchgeführt werden. Bedingung ist jedoch, daß in einer der Stufen die bereits angegebenen Mengen an anionischen Gruppen oder zur Anionbildung geeigneten Gruppen in den Polyurethanharnstoff eingeführt werden.

d) Als Polyisocyanate werden di- und polyfunktionelle Polyisocyanate eingesetzt, z.B. Hexandiisocyanat, Dicyclohexylmethandiisocyanat, Isophorondiisocyanat, bevorzugt jedoch aromatische Di- und Polyisocyanate, wie die Toluylendiisocyanat-Isomeren, Diphenylmethan-4,4'- und/oder 2,4'- und/oder 2,2'-Isomeren, sowie gegebenenfalls die höhermolekularen Polyphenylpolymethylenpolyisocyanate, wie sie durch Phosgenierung von rohen Formaldehyd-/Anilin-Kondensationsprodukten (Polyamingemischen) entstehen und als gegebenenfalls undestillierte Sumpfprodukte verwendet werden. Sulfongruppen-haltige Polyisocyanate sind gleichfalls als hydrophile Polyisocyanate einsetzbar.

Als Polyisocyanate können jedoch weiterhin alle bekannten Polyisocyanate zur Umsetzung benutzt werden, wie sie beispielsweise in der DE-OS 28 32 253 ausführlich aufgeführt werden. In der letztgenannten DE-OS werden auch weitere Beispiele für die Reaktionskomponenten a) und b) genannt. Weitere Beispiele für die anionisch, salzbildenden Reaktionskomponenten c) werden in der DE-OS 25 50 797 angeführt.

Die reaktiven Komponenten a), b) und c) werden mit überschüssigen Mengen an Di - und/oder Polyisocyanaten zur Ausbildung von NCO-Prepolymeren A) mit NCO-Gehalten von 2 bis 12 Gew,-% NCO, vorzugsweise 2,5 bis 8 Gew.-%, insbesondere 2,5 bis 6 Gew.-% NCO, in üblicher Weise, z.B. gemeinsamem Erwärmen der Komponenten bei 50 bis 100 °C, bis zur NCO-Prepolymerbildung, umgesetzt.

Die Gesamtfunktionalität der NCO-Prepolymeren A) soll mindestens 2,1, vorzugsweise ≧2,5 betragen, d.h. mindestens eine der Komponenten a), b), c) und/oder d) muß mehr als bifunktionell sein.

Diese NCO-Prepolymeren A) können gegebenenfalls mit weiteren Mengen an niedermolekularen Polyisocyanaten B) in Mengen bis zum halben Gewichtsanteil von A) und bis zur Ausbildung von A) + B)-Mischungen mit NCO-Gehalten von ≦30 Gew.-% NCO, vorzugsweise ≦20 Gew.-% NCO, vermischt werden. Es können dabei auch unterschiedliche Polyisocyanate zur Prepolymerbildung d) und zur weiteren Aufstokkung B) des NCO-Gehaltes verwendet werden. Bei gleichen Polyisocyanaten kann auch bereits bei der Prepolymerbildung A) ein entsprechend hoher Anteil an Polyisocyanaten d) verwendet werden.

Bei Verwendung solcher Mischungen mit hohem NCO-Gehalt können bei der Herstellung der hochgefüllten Polyurethan(harnstoffe) entsprechend zusätzlich beispielsweise Polyetherpolyole oder OH-Gruppen enthaltende Polyetherpolyurethanvoraddukte mit endständigen OH-Gruppen zugegeben werden.

Unter gewissen Voraussetzungen können auch direkt alle zur NCO-Prepolymerherstellung erforderlichen Ausgangskomponenten bei der vollkontinuierlichen Produktion der erfindungsgemäßen hochgefüllten, anionisch modifizierten PUR-Trägermassen eingesetzt werden, d.h. die separate NCO-Prepolymerherstellung und Zwischenlagerung ist nicht zwingend erforderlich. Es hat sich bei dieser "in situ"-Prepolymerherstellung als ausreichend erwiesen, wenn vor allem die nieder- oder höhermolekularen Polyole, insbesondere die bevorzugt verwendeten Polyetherpolyole und gegebenenfalls weiteren H-acide Kettenverlängerungsmittel in einem Durchflußmischer mit bevorzugt aromatischen Di- und Polyisocyanaten kurzzeitig, z.B. etwa nur 10 bis 60 Sekunden bei erhöhten Temperaturen von 50 bis 120 °C, bevorzugt 80 bis 100 °C, weitgehend zur Reaktion gebracht werden.

Wenn der Isocyanatgehalt nach dieser kurzen Zeit unter 50 %, bevorzugt unter 25 %, über dem berechneten Wert für NCO-Prepolymerumsetzung liegt, wirkt sich die unvollständige NCO- Prepolymerbildung nicht nachteilig auf die Eigenschaften der damit hergestellten PUR-Massen aus, andererseits ist diese Vorgehensweise für einen vollkontinuierlichen Produktionsablauf von großem Vorteil, insbesondere wenn NCO-Prepolymere mit begrenzter Lebensdauer oder starker Erhöhung der Viskosität beim Lagern eingesetzt werden sollen. Solche NCO-Prepolymere sind z.B. solche, welche gewisse Mengen an tertiär Aminogruppen enthaltenden Verbindungen, z.B. tertiär aminhaltige Di- oder Triole, eingebaut enthalten.

C) Die Umsetzung der NCO-Prepolymeren A) oder (A + B) erfolgt mit weit überstöchiometrischen Mengen an Wasser im heterodispersen System. Bevorzugt verwendet man eine gegebenenfalls anteilige Wassermenge zum Anteigen oder Dispergieren der Füllstoffe. Die Wassermenge ist in der Praxis vorwiegend auf die 2 bis 60-fache Menge beschränkt, kann jedoch auch 2-bis 3-fach höher sein.

Die NCO-Prepolymeren werden dann - gegebenenfalls selbst bereits in anteiligen Wassermengen dispergiert -, zugemischt, wobei die NCO-Prepolymeren im allgemeinen die Füllstoffe gut benetzen, umhüllen und dann mit Wasser relativ langsam (mit zugesetzten, anteiligen Mengen an Di- oder Polyaminen schneller) zur Polyurethan(harnstoff)-Matrix aushärten. Durch Erhöhung der Reaktionstemperatur kann die Wasserreaktion auf wenige Minuten oder gar Sekunden verkürzt werden.

Bei der Kettenverlängerungsreaktion mit Wasser werden vorzugsweise anionische Gruppen aufweisen-

de oder anionisohe Gruppen bildende Polyurethanausgangskomponenten mitverwendet, insbesondere Verbindungen mit Sulfonat- und/oder Carboxylatgruppen und Amino- oder Hydrazin- oder Hydrazid-Reaktivgruppen. Es werden insbesondere Diaminsulfonate, Diamin-disulfonate oder Diamin-carboxylate verwendet, z.B. aliphatische Diaminsulfonate wie

$H_2N.CH_2.CH_2.NH.CH_2.(CH_2)_x$-$SO_3$-A

(x = 1 bis 3, A = Alkalikation, z.B. Lithium, Natrium, Kalium oder tertiäre Amine), aromatische Diamino-mono- oder- dicarbonsäuren z.B.

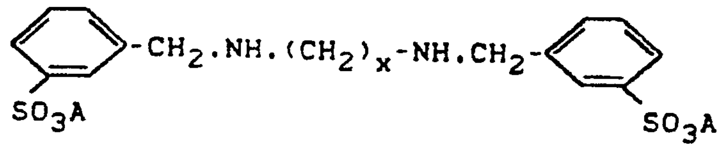

Hydrazinsulfonsäure (oder ihre Salze) oder aliphatische Diamincarboxylate wie

$H_2N.CH_2.(CH_2)_x.NH.CH_2(CH_2)_y.COO^{\ominus}$-A

Neben diesen bevorzugten Verbindungen können jedoch auch Mono- oder Diaminocarbonsäuren verwendet werden, z.B. Glycin, ß-Alanin, 6-Aminocapronsäure, 4-Aminobenzoesäure, 3,4-Diaminobenzoesäure oder Lysin oder Lysinmonomethylester. Weitere Beispiele sind Amino oder Diaminosulfonsäuren, z.B. Sulfanilsäure, Naphthylaminsulfonsäure, 4,4'-Diaminodiphenyl-disulfonsäure, 2,2'- oder 4,4'-Diaminodiphenylethersulfonsäure-2. Weitere Beispiele von Hydroxycarbonsäuren sind: Dimethylolpropionsäure, Glykolsäure und 4,6-Dihydroxyisophthalsäure.

Die Aniongruppen in den hochgefüllten Polyurethanharnstoffgruppen haben nicht nur auf die Bindung sondern auch auf die Abriebbeständigkeit von Füllstoffen einen günstigen Einfluß. Außerdem sorgen die Ionenladungen für eine feindisperse Verteilung oder sogar Lösung der Isocyanatverbindungen in den in sehr hohen stöchiometrischen Überschüssen angewendeten Mengen an Wasser (eine Art Emulgatorwirkung), so daß zunächst eine unerwünschte Koagulation der Polyurethane für sich selbst nicht auftritt, sondern eine sehr gleichmäßige Umhüllung der Füllstoffteilchen durch den aus den NCO-Prepolymeren A) im Wasser sich bildenden (anionischen) Polyurethanharnstoff erfolgt. Die NCO-Prepolymeren A) sind also vorzugsweise in Wasser dispergiert und schlagen sich auf den Füllstoffteilchen als Belag oder Umhüllung nieder.

Die anionischen Gruppen können jedoch nicht nur über die NCO-Prepolymere sondern auch über die Kettenverlängerungsreaktion in Wasser mit den vorgenannten Aminocarboxylaten oder Amino-sulfonaten (vorzugsweise in ihrer Salzform) eingeführt werden. Die Reaktion erfolgt hierbei in einfacher und gut steuerbarer Weise in der wäßrigen Phase, in welcher zumeist auch die Füllstoffe bereits dispergiert sind.

Die anionischen Polyurethanharnstoff-Massen können in einer speziellen Ausbildung des Verfahrens partiell mit Kationengruppen oder zur Kationenbildung befähigten Gruppen ausgestattet werden, so daß die Trägermassen einen entsprechenden ampholytischen Charakter besitzen, d.h. sowohl kationische als anionische Gruppen aufweisen. Erfindungsgemäß dominiert jedoch der Anionengehalt, d.h. der Gehalt an negativ geladenen Ionen ist im Endprodukt größer als der der positiv geladenen Ionen. Die angegebene Menge an anionischen Gruppen ist als Differenzbetrag zwischen kationischen und anionischen Gruppen zu verstehen.

Die Kationenbildung erfolgt im allgemeinen nach den in der Polyurethanchemie üblichen Verfahren, die nur zusammenfassend und beispielhaft erwähnt werden.

Als kationische Gruppen können im Prinzip quarternäre oder salzartige Ammoniumgruppen, aber auch Sulfonium- oder Phosphoniumgruppierungen eingesetzt werden. Bevorzugt ist die Verwendung von quartären Ammoniumgruppen oder tertiären Aminogruppen aufweisenden Verbindungen, welche nachträglich in die Ammonium(salz)-Form überführt werden. Die Menge der partiell (d.h. im Unterschuß gegenüber anionischen Gruppen) einzubauenden kationischen Gruppen bzw. Kationen bildenen Gruppen ist 10 bis 3000 Milliäquivalente an Kationen bzw. Kationen bildenden Verbindungen pro 1000 Gramm Feststoff-Polyurethan/Matrix. In den Fällen, wo man bereits quarternierte oder in Salzform über führte Verbindungen einsetzt, beträgt die Obergrenze im allgemeinen 1000 Milliäquivalente pro 1000 g PUR-Feststoff, da andernfalls während der Reaktion eine zu hohe Viskosität sich störend bemerkbar macht. Bevorzugt werden

30 bis 750 Milliäquivalente kationischer oder Kationen bildender Gruppierungen, besonders bevorzugt 50 bis 750 Milliäquivalente kationischer oder Kationen bildender Gruppen auf 1000 g Feststoff-Polyurethan eingebaut.

Als kationenbildende Verbindungen werden bevorzugt tertiäre Aminogruppen-enthaltende Di- oder Polyole verwendet, z.B. N-Methyldi-(ethanol)amin oder -(propanol)amin, N,N-Di-methylaminomethyl-propandiol-1,3, Bis-hydroxyethylpiperazin, aber auch höherfunktionelle Verbindungen, wie z.B. Triethanolamin oder höhermolekulare Verbindungen wie z.B. Polyoxyalkylenether, welche auf tert. Amin-Polyole z.B. der genannten Art, gestartet sind. Weitere derartige einbaufähige tert. Aminverbindungen werden beispielsweise in der DE-PS 3 461 102 oder der Österreichischen Patentschrift 257 170 aufgeführt. Es können jedoch auch quarternierte Verbindungen wie z.B. Tetramethylammoniumchlorid oder Tetramethylammoniummethylsulfonat als Einbaukomponenten verwendet werden. Bisweilen ist es auch ausreichend, Verbindungen, welche tertiäre Amin-Endgruppen ergeben, in die Verbindungen einzubauen, z.B. N,N-Dimethylaminoethanol.

Im Falle der Verwendung oder Mitverwendung von Braunkohlenstaub als Füllstoff ist es speziell möglich und speziell vorteilhaft, durch Polyaddition von Isocyanatprepolymeren mit tertiärem Stickstoff und Anionengruppen enthaltenden Kettenverlängerungsmitteln erhaltene Verbindungen einzusetzen. Die Polyurethanharnstoff-Trägermasse reagiert dabei mit den sauren Komponenten des Füllstoffes, beispielsweise den Huminsäuren, zu einer partiellen Ampholytform (Salzform). Im Falle der Humatbildung (mit den Huminsäuren des Torfs oder der Braunkohle wird dabei gleichzeitig die Wasserlöslichkeit der Huminsäuren herabgesetzt oder gar unterbunden.

Zur Herstellung von (partiell) kationische oder Kationen bildende Gruppen aufweisenden anionischen Polyurethan(harnstoff)-Massen ist am besten ein Weg über Isocyanatprepolymere geeignet, welche kationische Gruppen eingebaut enthalten oder eine zur Kationenbildung befähigte Gruppierung wie tertiär gebundenen Stickstoff, besitzen. Die Kettenverlängerung erfolgt dann mit anionischen Gruppen aufweisenden oder anionische Gruppen bildenden Kettenverlängerungsmitteln. Zur Salzbildung können auch phosphorsaure Salze herangezogen werden, welche z.B. notwendige Wachstumskomponenten für die Klärschlammbakterien darstellen. In vielen Fällen reicht jedoch auch bereits die Salzbildung mit den Huminsäuren oder sonstigen sauren Bestandteilen aus den Klärschlämmen aus.

Die Füllstoffe D) sind wesentlicher Bestandteil wasseraufnahmefähiger Polyurethanharnstoffmassen, wobei durch eine Wechselwirkung zwischen den Füllstoffen und der Polyurethanharnstoffmasse die unerwartet hohe Wasseraufnahmefähigkeit und auch der hohe Abbaueffekt bei der erfindungsgemäßen Verwendung der beanspruchten Träger eintritt. Entweder durch die Polyurethane (z.B. in Form einer hydrophilen PU-Matrix) und/oder (bevorzugt) durch hydrophile oder zellige Füllstoffe (z.B. Braunkohle oder Schwarztorf und/oder durch die PUR-Schaumstoffe) wird eine solche Hydrophilie, d.h. Wasseraufnahmefähigkeit in die Träger eingebracht, daß sie den genannten Wasseraufnahmefähigkeitswerten entsprechen.

Bevorzugte Füllstoffe sind homogene oder zellige Kunststoffe verschiedener Art, insbesondere aber vorgefertige Polyurethan-Schaumstoffteilchen oder Polyurethan(halb)-hartschaumstoff-Granulate oder -Pulver.

Ökonomisch besonders interessant ist die Verwendung von zelligen Kunststoffen, insbesondere von den in riesigen Mengen zwangsweise anfallenden PUR-Weichschaumstoffabfällen. Diese PUR-Schaumstoffabfälle, vorzugsweise auf Polyetherbasis, können in Form eines preisgünstig erhältlichen, regelmäßigen oder unregelmäßigen, stückigen Granulats mit Kantenlängen von einigen mm bis zu mehreren cm, (vorzugsweise 0,2 bis 5 cm) auch als Mischung verschiedener Schaumstoff-Raumgewichte, als Füllstoff unter Bindung mit den anionischen Polyurethanharnstoffmassen zur Herstellung der Träger verwendet werden. Bevorzugt werden PUR-Schaumstoffteilchen mit Raumgewichten von etwa 10 bis 110 kg/m$^3$ in die PU-Matrix eingebaut. Insbesondere werden die PUR-Weichschaumstoffe in stückiger Form verwendet, während harte, spröde Polyurethanteilchen vorzugsweise in pulverisierter Form eingesetzt werden, Überraschenderweise sind jedoch selbst Abfallweichschaumstoff-Flocken mit einem mittleren Gewicht unter 23 kg/m$^3$, bezogen auf Blockschaumstoff in der mit Polyurethanharnstoffen gebundenen, bedeckten oder überzogenen Form hervorragend geeignete Träger für aufwachsende Biomassen. Die Schaumstoffe können auch in Form von Würfeln oder Polyedern, sei es mit geraden, konvexen oder konkaven Flächen, mit gleichen oder verschiedenen Kantenlängen, eingesetzt werden. Die Hohlräume der Schaumstoffe werden bei der Bindung mit der anionischen PUR-Matrix praktisch ganz oder zumindest teilweise gefüllt, bzw. an ihrer Oberfläche mit dem Polyurethan(harnstoffen) belegt und somit steigt das Raumgewicht und die mechanische Festigkeit hinreichend an, damit die Schaumstoff-Flocken nicht mehr aufschwimmen und auch gegenüber mechanischen Einflüssen dauerhaft resistent sind.

Neben den vorgefertigten Schaumstoffen oder auch bei erfindungsgemäß typischen Füllstoffen werden fossile Lignozellulosen oder deren Folgeprodukte enthaltende Naturstoffe wie insbesondere Braunkohle

eingesetzt. Sie ergeben gleichfalls in Folge ihrer hohen Wasserbindekraft mit den anionischen Polyurethanharnstoff-Massen hochwasseraufnahmefähige Träger. Vorgefertigte Schaumstoffteilchen und/oder die fossilen Lignozellulose (insbesondere Braunkohlenpulver) sind daher bei der Herstellung der füllstoffhaltigen Polyurethanharnstoffträgermassen die im erfindungsgemäßen Verfahren kennzeichnenden Füllstoffe. Die Braunkohle stellt einen ganz besonders vorteilhaften, hydrophil wirkenden Füllstoff dar und ist als Füllstoff entsprechend der Erfindung besonders bevorzugt, mindestens als Füllstoff neben oder anstelle von Polyurethanschaumstoffteilchen, und gegebenenfalls weiteren zugesetzten Füllstoffen anderer Art.

Braunkohle vermag hohe Mengen an Wasser hydrophil zu binden, ohne das sich diese Materialien naß anfühlen, so lassen sich z.B. mehr als 150 % Wasser, bezogen auf Braunkohle-Trockensubstanz binden. Außerdem ergibt Braunkohle günstige topologische Bedingungen für die Herstellung von porösen Trägermassen, wie sie sich als Träger bei der biologischen Abwasserreinigung besonders eignen.

In fossilen Ablagerungsstätten, bzw. im Aachener Braunkohlenrevier, liegt die Braunkohle mit einem durchschnittlichen Wassergehalt von etwa 60 Gew.-% vor. Der Gehalt an wasserlöslichen Bestandteilen ist in dieser natürlichen Form der Braunkohle so groß, daß die direkte Verwendung als Füllstoff für das erfindungsgemäße Verfahren für Herstellung hochgefüllter anionischer Polyurethanharnstoffmassen nur wenig geeignet erscheint. Vielmehr ist es zweckmäßig, den Anteil wasserlöslicher Verbindungen in der Braunkohle zu reduzieren.

Dies kann am einfachsten dadurch erreicht werden, daß man die wasserhaltige Braunkohle einem Trocknungsprozeß unterwirft und den Wassergehalt stark herabsetzt, mindestens unter 20 Gew.-%, besser unter 10 Gew.-%. Mit fortschreitender Abnahme des natürlichen Feuchtigkeitsgehalts und Zunahme der Trocknungstemperatur und -dauer erfolgen in einem Temperungsprozeß Umwandlungs- bzw. Kondensationsreaktionen unter Molekülvergrößerung, welche die Wasserlöslichkeit der Huminsäuren stark verändern und die Braunfärbung des Wassers, in dem eine Probe an Braunkohle z.B. suspendiert ist, verringert.

Nach diesem Trocknungsprozeß ist die Braunkohle als Füllstoff für die bevorzugte, erfindungsgemäße Verwendung als Polyurethanharnstoff-Trägermassen im wäßrigen Mi lieu wesentlich besser geeignet und deshalb besonders bevorzugt.

Eine weitere Methode, die Anteile löslicher Verbindungen in der Braunkohle zu reduzieren, ist eine chemische Behandlung, beispielsweise mit Überschußmengen an Isocyanatverbindungen. Mit Di- und Polyisocyanaten, die monomer oder polymer sein können, reagieren H-acide Gruppen der gegebenenfalls noch mehr oder weniger feuchten Braunkohle ebenfalls unter Molekülvergrößerung und gleichzeitig erfolgt in Anwesenheit von Restfeuchte eine Polyharnstoffumhüllung unter Kohlendioxidabspaltung. Beide Methoden, das Tempern unter Feuchtigkeitsverminderung und/oder -entzug und die Polyisocyanatbehandlung der Braunkohle lassen sich am einfachsten direkt bei der Herstellung der Polyurethanharnstoffträgermassen miteinander kombinieren.

Darüber hinaus hat sich überraschenderweise gezeigt, daß mit anionischen Polyurethanharnstoffen gebundene Braunkohle enthaltende Träger bei ihrer Verwendung als Trägermassen für Bakterien bei der Abwasserreinigung auch dann noch geeignet sind, wenn zunächst über eine kurze Zeit wasserlösliche Restbestandteile, beispielsweise an Huminsäureverunreinigungen oder gelbfärbenden Verbindungen, ausbluten, weil durch die erfindungsgemäßen Trägermassen die biologische Abwasserreinigung so sehr verbessert wird, insbesondere bei Erhöhung der Schadstoffkonzentration, daß die löslichen Komponenten, soweit sie von der Braunkohle stammen, nicht einmal in der Anlaufperiode nach Einsetzen der Trägermassen im Auslauf der biologischen Reinigungsstufen in Erscheinung treten.

Torf enthält bekanntlich bedeutend höhere Mengen an wasserlöslichen Bestandteilen als Braunkohle, die Wasser sogar dunkelbraun färben. Deshalb ist die Anwendung der oben beschriebenen Maßnahmen zur drastischen Reduzierung der Löslichkeit besonders dringend erforderlich, insbesondere wenn die erfindungsgemäß bevorzugte Verwendung als Trägermaterial für mikorbielle Umwandlungprozesse vorgesehen ist.

Schwarztorf ist gegenüber Weißtorf grundsätzlich besser geeignet. In einer vorausgehenden Temperung wird dem bis 80 Gew.-% Wasser enthaltenden Schwarztorf (bezogen auf das natürliche Material) der größte Teil des Wassers entzogen, so daß die Restfeuchte möglichst deutlich unter 20 Gew.-%, bezogen auf Gesamtmenge sinkt. Eine Polyharnstoffmodifizierung des weitgehend entwässerten Schwarztorfs mit nieder- oder höhermolekularen Di- oder Polyisocyanaten bei Temperaturen von z.B. 70 bis 110 °C bewirkt zusätzlich eine stärkere Reduzierung der wasserlöslichen Anteile. Bevorzugt werden aromatische Di- und Polyisocyanate in einer Menge eingesetzt, daß pro Isocyanatäquivalent (d.s. 42 g Isocyanatgruppen) 0,5 bis 2,5 kg Schwarztorf, bezogen auf Trockenmasse, umgesetzt werden.

Im allgemeinen wird für das erfindungsgemäße Verfahren der Schwarztorf zur Herstellung der anionischen Polyurethanharnstoff-Trägermassen in dieser modifizierten Form bevorzugt eingesetzt. Eine Ausnahme ist jedoch möglich, wenn beispielsweise die Polyurethanharnstoffmassen als Trägermaterial zur Aufnahme von Samen zur Ausbildung von Setzlingen für den Gartenbau Verwendung finden sollen. Hierbei ist das Ausbluten wasserlöslicher Verbindungen aus dem Torf ohne Bedeutung.

Die Verwendung nachbehandelter Braunkohlepulver ist erfindungsgemäß speziell bevorzugt.

Im Verfahren zur Herstellung der Polyurethanharnstoffmassen können neben den Schaumstoff bzw. Lignozellulosefüllstoffen weitere Füllstoffe mitverwendet werden, z.B. Kohlen wie Steinkohle, feingemahlene Steinkohlen, Holzkohle oder Braunkohlenkoks. Diese Kohlen werden allerdings im Herstellungsverfahren vorzugsweise nur als Mischkomponente zu den vorgenannten Schaumstoff- und/oder Lignozellulosefüllstoffen verwendet.

Bei der Verwendung der füllstoffhaltigen Polyurethanharnstoffmassen werden jedoch auch solche anionische Polyurethanmassen als Träger beansprucht, welche als Füllstoffe die genannten Kohlen wie Steinkohle, feingemahlenen Koks, Holzkohle oder Braunkohlenkoks als alleinige Füllstoffe enthalten, für den genannten Verwendungzweck beansprucht, wenn sie auch weniger bevorzugt sind und nicht die maximalen erfindungsgemäß erzielbaren Wirkungen zeigen.

Neben den genannten Füllstoffen können auch feinteilige, über 100 °C schmelzende Destillationsrückstände, insbesondere Destillationsrückstände der Toluylendiisocyanat-Destillation, welche beispielsweise durch Eintragen der Destillationsrückstände in Wasser unter Denaturierung und anschließender Granulierung erhalten werden, eingesetzt werden. Diese TDI- Rückstände können gegebenenfalls auch noch nachträglich durch Behandlung mit reaktive Wasserstoffe tragende Verbindungen wie Ammoniak, Polyolen oder Polyaminoverbindungen modifiziert sein. In vielen Fällen tragen sie noch geringe Mengen inkludierter NCO-Gruppen oder reaktive Abwandlungsprodukte von Isocyanaten, welche mit den Biomassen oder abzubauenden Verbindungen reagieren können. Derartige Destillationsrückstände werden beispielsweise in den DE-OS 28 46 814, 28 46 809, 28 46 815 beschrieben.

Weiterhin geeignete Destillationsrückstände sind aber auch hochschmelzende Destillationsrückstände von Aminen, Phenolen, Caprolactam u.ä..

Homogene und zellige Polymerisat-Kunststoffe aus Vinyl- und/oder Divinylverbindung können in zerkleinerter Form, insbesondere Polymerisat-Kunststoff-Abfälle, als Füllstoffe, vor allem als Mischkomponente, (mit)verwendet werden.

Anorganische Füllstoffe wie Quarz, Seesand, pyrogene Kieselsäure (Aerosil), Silikate, Alumosilikate, Bentonite, Aluminiumoxid, Bimsstein, Kieselsole, Wasserglas aber auch Calciumoxid, Calciumcarbonat, Schwerspat, Gips, Eisen-II-und/oder Eisen-III-oxide, insbesondere aber auch feinteilige gegebenenfalls magnetische Oxide wie Magnetit, Cobaltoxide, Bariumferrite, Eisenpulver oder $\Delta$-$Fe_2O_3$ in Pigmentform werden bevorzugt nur in Anteilen neben den fossilen Lignozellulosen und/oder Schaumstoff-Füllstoffen im Verfahren zugesetzt, gegebenenfalls bei der Verwendung der auch den kohlehaltigen Füllstoffen enthaltenden anionischen Polyurethanharnstoffmassen zugesetzt, um eine gewisse Regulierung des spezifischen Gewichts der Träger zu gestatten so daß diese in der zu klärenden Flüssigkeit absinken oder schweben, jedoch keinesfalls aufschwimmen. Besonders feinteilige anorganische Füllstoffe (z.B. mit Primärteilchen unter 10 $\mu$m und hoher Oberfläche, z.B. Aerosil oder Eisenoxide) begünstigen bei Anwesenheit in den erfindungsgemäß zu verwendenden Trägern die Sauerstoffübertragung auf die Klärschlammbakterien und somit bessere Abbauleistungen bzw. Abbauwirkungen, wobei Metalloxide offenbar besonders günstige, spezifische Sauerstoffübertragungsfunktionen bewirken und somit erfindungsgemäß günstige Abbauwirkungen ergeben. Als modifizierende Füllstoffzusätze können auch Fasern (z.B. anorganische Fasern) wie Glasfasern oder natürliche bzw. synthetische Fasern (z.B. Baumwollstaub) mitverwendet werden.

Die mittlere Korngröße der Füllstoffe liegt im allgemeinen zwischen 0,1 bis 1000 $\mu$m, bevorzugt unter 300 $\mu$m, besonders bevorzugt unter 100 $\mu$m, wobei insbesondere für Aktivkohle und anorganische Bestandteile sowie beim Steinkohlenpulver bzw. Holzkohlenpulver geringere Korngrößen bevorzugt werden als etwa im Fall von Torf oder Braunkohlenstaub, wobei Torf und Braunkohle gegebenenfalls faserige Anteile mit mehreren mm Länge enthalten können.

Für als Füllstoffe zu verwendende Schaumstoffteile gilt die Größenbeschränkung der Korngröße nicht. Hierzu können gegebenenfalls einige mm (z.B. 1 bis 30, vorzugsweise 2 bis 10 mm) große Schaumstoffstücke von der Polyurethan(harnstoff)matrix eingebettet werden oder sogar etwa 2 bis 10 mm dicke PU-Schaumstoff-Folien.

Der gesamte Füllstoffanteil soll über 5 Gew.-%, bevorzugt >15 Gew.-%, besonders bevorzugt >40 Gew.-% betragen, wobei eine Obergrenze von ≤97 Gew.-%, bevorzugt ≤95 Gew.-% eingehalten wird. Die Anteile Füllstoffe werden in Gew.-%, bezogen auf die Trockensubstanz der gefüllten Polyurethan(harnstoff)-massen berechnet. Die Obergrenze wird im allgemeinen vom Zusammenhalt und der Abriebbeständigkeit der hochgefüllten Polyurethanmassen bestimmt. Es ist sogar in Einzelfällen möglich, den Füllstoffanteil noch weiter zu steigern, z.B. auf 98 oder gar 99 %, wenn man die biologische Klärung in einer Festbettanordnung durchführt.

Besonders bevorzugt werden anionische Polyurethanmassenträger, welche Füllstoffkombinationen von fossilen Lignozellulosen, insbesondere Braunkohlenstaub (und/oder Kohlenpulvern) und/oder PU-Schaumstoffteilchen (bevorzugt PU-Weichschaum-Abfallteilchen) enthalten. Günstigste Eigenschaften werden in der Kombination von Polyurethanschaumstoffteilchen mit Braunkohle erhalten. Die neben den genannten, bevorzugten Füllstoffarten zusätzlich zu verwendenden Füllstoffe wie anorganische Füllstoff- oder Destillationsrückstände und andere, bereits erwähnte sonstige Füllstoffe, werden bevorzugt in Mengen <20 Gew.-% verwendet.

Die Mischungsverhältnisse von Schaumstoffteilchen und der bevorzugten Braunkohle können beliebig liegen, auch werden bevorzugt Mischungsverhältnisse von 1 zu 10 bis 10 zu 1, bevorzugt 1 zu 5 bis 5 zu 1 eingesetzt.

Die Füllstoffe werden in die Polyurethan(harnstoff)-Matrix in verschiedenen, in der Beschreibung noch näher angegebenen Ausführungsformen eingearbeitet. So können sie einer der Ausgangsstoffe oder der vorpolymeren Produkte, vorzugsweise den NCO-Prepolymeren oder den OH-funktionellen, höhermolekularen, gegebenenfalls mit Polyisocyanaten vorverlängerten Polyolen, untergemischt werden und dann mit dieser Mischung die polyurethanbildende Reaktion durchgeführt werden. Bevorzugt werden jedoch die Füllstoffe zunächst mit Wasser benetzt oder in Wasser dispergiert und mittels Zugabe der NCO-Prepolymeren von diesen gebunden, wobei jedoch gleichzeitig der Polyurethan(harnstoff)-Aufbau (insbesondere mittels Wasser als Kettenverlängerungsmittel) erfolgt. Bei der Verwendung der anionischen NCO-Prepolymeren ist eine kurzzeitige Vermischung mit einem Teil der vorgesehenen Wassermenge, beispielsweise in einem Durchflußmischer oder statischen Mischer, zur Herstellung einer sehr feinteiligen Emulsion von Vorteil, die eine sofortige Benetzung auch stärker vorgetrockneter, fossiler Zellulosen mit der Gesamtmenge Wasser möglich macht, so daß die Isocyanatreaktion in optimaler Verteilung ablaufen kann.

E) Als Zusatz- und/oder Hilfsstoffe können alle in der PUR-Chemie üblichen Stoffklassen eingesetzt werden, z.B. Stabilisatoren, UV-Absorber, Dispergiermittel, Emulgatoren, Silikonderivate, Farbstoffe und Pigmente. Als Katalysatoren können die üblichen Polyurethankatalysatoren, z.B. tert.-Amine, Metallkatalysatoren (z.B. Zinnkatalysatoren) eingesetzt werden, was in vielen Fällen jedoch nicht zwingend erforderlich ist.

Die hydrophilen, Füllstoff-haltigen, vorzugsweise Braunkohle-haltigen Polyurethan(harnstoff)-Träger liegen bei Verwendung stark hydrophiler NCO-Prepolymeren in Form einer mehr oder minder gelartigen, gequollenen, gegebenenfalls geschlossenzelligen, schaumgelartigen Form vor, die sich feucht anfühlen.

Am besten werden die stark hydrophilen NCO-Prepolymeren in Kombination mit vorgefertigtem Polyurethan-Weichschaumstoff(Abfall)-Granulatauf hydrophober Polyetherbasis und gegebenenfalls weiteren Füllstoff eingesetzt, weil die Zellstruktur der vorgefertigten Weichschaumstoff-Teilchen ihre Resistenz in Wasser, vor allem unter hydrodynamischer Beanspruchung, deutlich erhöht und die Zellstruktur offen bleibt.

Eine weitere günstige Kombination ist die Mitverwendung stark hydrophiler Polyether oder daraus hergestellter NCO-Prepolymerer mit hydrophoben Polyethern oder deren NCO-Prepolymeren. Je nach Mischungsverhältnis beschleunigen einerseits die stark hydrophilen Polyether die Isocyanatreaktionen bei der Herstellung der erfindungsgemäßen Polyurethanharnstoff-Trägermassen, beispielsweise schon bei der Mitverwendung von 5 bis 10 Gew.-% der stark hydrophilen Polyetherkomponente, bezogen auf die Gesamtmenge Polyether, ohne andererseits einen Verlust an Wasserbeständigkeit hinnehmen zu müssen.

Offenzellige, hochgefüllt, anionische Polyurethanharnstoff-Massen entstehen auch ohne vorgefertigte Polyurethan-Schaumstoffe, wenn der hydrophobe Polyether-Anteil wenigstens 15 bis 30 Gew.-%, bezogen auf die Gesamtmenge Polyether beträgt, d.h. 70 bis 85 Gew.-% stark hydrophiler Polyether eingesetzt werden. Die segmentartige Hydrophobierung der Polyurethanharnstoff-Ausgangskomponenten ist vorteilhafter und auf die jeweiligen geforderten Eigenschaften oder Bedingungen leichter abzustimmen als eine statistische Verteilung der Ethylenoxidgruppen auf einem Polyethertyp.

Trägermassen auf Basis hydrophober NCO-Prepolymerer weisen dagegen einen trockenen Griff auf und unterscheiden sich dadurch deutlich von den gelartigen Produkten. Sie zeigen eine gute Abriebfestigkeit und überraschend hohe Wasseraufnahmefähigkeits-(WAF)-Werte. Sie fallen auch - im Gegensatz zu Gelen - direkt in kleinstückiger, direkt verwertbarer Form an, sind in Wasser über Jahre ohne Abbauerscheinungen haltbar und werden deshalb bevorzugt.

In geeigneten, kontinuierlich arbeitenden Mischaggregaten, wie einem Doppelpaddel-Schneckentrog, können alle Komponenten praktisch gleichzeitig oder nur wenige Sekunden nacheinander zugegeben und intensiv vermischt werden, wobei die Isocyanatreaktionen sofort beginnen. Auf die Reaktionsgeschwindigkeit kann man in bekannter Weise mit Hilfe von Katalysatoren und/oder Anwendung erhöhter Temperaturen Einfluß nehmen. Zum Start der Isocyanatreaktion werden Temperaturen zwischen 10 bis 90°C, bevorzugt 20 bis 70°C gewählt. In vielen Fällen sind die üblichen Raumtemperaturen gut geeignet. Nach intensiver Endmischung aller Reaktionskomponenten kann die Reaktionstemperatur bis auf 90-95°C gesteigert werden.

Wasser ist nicht nur, wie bereits erwähnt, als Reaktionspartner für die Polyisocyanatverbindungen erforderlich, sondern es dient auch als Dispersionsmittel in größeren Überschußmengen, gleichgültig, ob hydrophile oder hydrophobe NCO-Prepolymere eingesetzt werden.

Besonders wichtig ist die resultierende Wasseraufnahmefähigkeit und das Wasserrückhaltevermögen des Endproduktes, d.h. der hochgefüllten, Polyurethan(harnstoff)-Trägermasse, die Abriebfestigkeit dieses hydrophilen (wasseraufnahmefähigen) Trägers, eine möglichst jahrelange Beständigkeit und Unlöslichkeit im Klärwasser und eine leichte Sinktendenz oder mindestens Schwebefähigkeit im Klärhecken, d.h. eine nicht aufschwimmende Charakteristik der Teilchen sowie die Nichtverklebung der einzelnen suspendierten Trägerteilchen.

Eine maximale Wasseraufnahmefähigkeit ist entweder dadurch zu erreichen, daß alle in dominierender Menge verwendeten Komponenten stark hydrophil sind, z.B. Polyurethan(harnstoff)-Ausgangsmaterialienwie z.B. >30 % Polyoxyethylengruppen enthaltende Polyole oder hydrophile Kettenverlängerungsmittel (ergibt hydrophile PUR-Gele als Matrix) oder bevorzugt auch der (insbesondere in etwa gleicher oder besser größerer Menge als die Polyurethane verwendete) hydrophile Füllstoff oder der Schaumstoff. Eine zu stark hydrophile PUR-Matrix d.h. stark hydrophile Polyurethanharnstoffe, ist jedoch, wie schon erwähnt, hinsichtlich der Langzeitlagerung im Wasser meistens nicht ausreichend beständig und im Wirbelbett nicht abriebfest. Die Wasseraufnahmefähigkeit der erfindungsgemäß zu verwendenden Träger ist in unterschiedlichen Ausführungsformen der Herstellung bzw. Zusammensetzung zu erzielen, doch gilt als Regel zum Handeln, daß man hydrophile Polyurethane sowohl mit hydrophilen wie auch hydrophoben Füllstoffen kombinieren kann, jedoch hydrophobe Polyurethane als Matrix am besten mit stark hydrophilen Füllstoffen, wie z.B. Braunkohle und/oder Verwendung von Polyurethan(Weich)Schaumstoffen kombiniert werden müssen, um die notwendige Wasseraufnahmefähigkeit der Träger zu erreichen. Der Anionengehalt der erfindungsgemäßen Produkte erhöht darüber hinaus die Hydrophilie.

Auch die bei der Reaktion mit den NCO-Prepolymeren und Füllstoffen vorhandene Wassermenge ist von großer Bedeutung und muß innerhalb der beanspruchten Verfahrensgrenzen durch einfache Vorversuche angepaßt werden.

Bei Verwendung von relativ geringen Mengen Wasserüberschuß, beispielsweise 20 Teile Wasser auf 80 Teile NCO-Prepolymer plus Füllstoffe entsteht mit z.B. hydrophoben NCO-Prepolymeren ein feinpulvriges oder krümeliges, nicht ausreichend hydrophiles und somit ungeeignetes Produkt mit hoher Ausschwemmrate; erst mit einer deutlich höheren Wassermenge (z.B. ab 33 Gew.-%) bindet das NCO-Prepolymer die Füllstoffe zu einem abriebfesten, wasseraufnahmefähigen Träger mit den erfindungsgemäß erforderlichen Eigenschaften.

Der Polyurethan-Schaumstoff wird wie die anderen Füllstoffe im allgemeinen in großen Überschußmengen an Wasser mit den Isocyanatverbindungen zur Reaktion gebracht. Als Isocyanatverbindungen werden im allgemeinen NCO-Prepolymere aus den genannten Komponenten, unter bestimmten Bedingungen jedoch auch Polyisocyanate alleine, insbesondere höherfunktionelle Sumpfprodukte des Polyphenyl-Polymethylen-Polyisocyanats oder TDI-haltige Rückstandsprodukte, verwendet. Die angewendete Wassermenge beträgt meistens ein Vielfaches, häufig die gleiche bis 10-fache Menge des Schaumstoffgewichtes. Der zumeist und bevorzugt mitverwendete, oberflächenaktive Füllstoff, wie Braunkohlenstaub, und gegebenenfalls weitere Füllstoffe, z.B. <20 Gew.-% an anorganischen Füllstoffen, wird in einfachen Mischapparaturen überraschend gleichmäßig auf und in den Schaumstoffzellen verteilt und mit Hilfe der Isocyanatreaktionen in der Wasser-gequollenen Polyurethanphase abriebfest gebunden. In den so resultierenden, hochgefüllten Polyurethan(harnstoff)massen ist der beispielsweise als Füllstoff eingesetzte Polyurethan-Weichschaumstoff-Abfall mit einem mittleren Raumgewicht von nur 23 kg/m$^3$ in seiner ursprünglichen Struktur und physikalischen Eigenschaft völlig verändert und wird erst durch diese grundlegende Modifizierung zu den Polyurethanharnstoffen erfindungsgemäß verwendbar. In den zumeist teilgefüllten Hohlräumen des Schaumstoffes kann eine hinreichende Menge Wasser gebunden werden, so daß es möglich ist, (Weich)Schaumstücke als Füllstoff in Kombination mit sowohl hydrophoben wie auch hydrophilen Polyurethan-Reaktionskomponenten, vorzugsweise NCO-Voraddukten und vorzugsweise mit zusätzlich hydrophilen Füllstoffen (Braunkohle) zu verwenden. Durch die Wechselwirkung von hydrophilen Füllstoffen (vorzugsweise Braunkohle) und den physikalisch gebundenen Wassermengen bildet sich eine vorteilhafte Struktur aus, auf der auch ein Bakterien bewuchs in die restlichen Hohlräume der modifizierten Schaumstoffe auftreten kann. Zur Regulierung des spezifischen Gewichts können bei der Herstellung dieser hochgefüllten Polyurethan(harnstoff)massen auch anorganische Füllstoffe in feinstverteilter Form verwendet werden, wodurch das notwendige spezifische Gewicht für die Klärflüssigkeit eingestellt und gegebenenfalls die Sauerstoffübertragung auf die Bakterien begünstigt werden kann.

Die Formgebung bei der Herstellung der hochgefüllten Polyurethan(harnstoff)-Massen wird in vielen möglichen Varianten auf die jeweilige Verfahrenstechnik der sehr unterschiedlich arbeitenden Kläranlagen

abgestimmt. Regelmäßiges oder unregelmäßiges stückiges "Granulat" erhält man - wenn man nicht direkt die gewünschte stückige Form aus der Reaktion erhält - nach den üblichen Schneide- oder Granuliertechniken. Im wesentlichen ist die Form der PU-Harnstoff-Massen bei der Verwendung vorgebildeter Schaumstoffe von deren ursprünglichen Form abhängig. In speziellen Fällen werden die erfindungsgemäß einzusetzenden, hochgefüllten Polyurethan(harnstoffe) in Klärbecken in Folienform gehängt oder spiralartig gewunden eingesetzt. In diesen Fällen werden zur Stabilisierung besonders großer Flächen gegebenenfalls textile Unterlagen nach an sich bekannten Gieß- oder Rakelverfahren mitverwendet. Diese Träger sind durch Oberflächen-Modifizierung folienartig geschnittener, vorgebildeter Schaumstoffe zugänglich.

In der kostengünstigsten und einfachsten Ausführungsform der biologischen Abwasserreinigung werden die Träger in Form eines unregelmäßigen Granulats in einer Größe von 0,1 bis 10 cm, bevorzugt 0,5 bis 5 cm eingesetzt. Dazu werden die weitgehend oder vollständig ausreagierten hochgefüllten Polyurethan(harnstoff)e in vorgefertigter Strang-, Block- oder Bandform mit üblichen Zerhackern oder Schneidgranulatoren auf die geeignete Stückgröße zerkleinert. Eventuell entstandenes Feinkorn kann beim Waschen gegebenenfalls isoliert und abgetrennt werden.

Bei Verwendung von stückigen Schaumstoffgranulaten und zusätzlichen Füllstoffen werden die Isocyanat-Reaktionen in Knetern oder in mit Flugschar-ähnlichen Werkzeugen ausgerüsteten Mischapparaturen durchgeführt, so daß eine nachträgliche Zerkleinerung nicht mehr notwendig ist.

Die erfindungsgemäßen, wassergequollenen, hydrophilen Träger stellen im allgemeinen weichelastische, sich mehr oder weniger feucht (im Falle hydrophiler Polyurethane) oder auch trocken anfühlende (im Falle hydrophober Polyurethane), abriebfeste Teilchen dar, welche sich in Wasser suspendieren lassen und dort langsam absinken.

Es war nicht vorauszusehen, daß die mit Füllstoffen wie Braunkohle hochgefüllten gegebenenfalls Schaumstoffe enthaltenden anionisch modifizierten Polyurethan(harnstoff)massen als Träger mit stark hydrophilen Eigenschaften in homogener Struktur ausreichend abriebfest hergestellt werden können, auf die biologische Klärung einen so günstigen Einfluß nehmen, obwohl die Füllstoffe aktiver Art, wie z.B. Braunkohle, innerhalb der Polyurethanmasse eingebettet liegen und sich die Biomasse der Bakterien zunächst in der äußeren, koharenten wäßrigen Phase befindet, und erst dort von außen aufwächst.

Die erfindungsgemäß eingesetzten Träger eignen sich für die meisten der gebräuchlichen Verfahren zur biologischen, aeroben oder anaeroben Klärung von Abwässern sowohl in industriellen als auch in kommunalen Kläranlagen, sowie in nitrifizierenden als auch denitrifizierenden Klärvorgängen.

Nach dem Stand der Technik ist die Verwendung von Weichschaumstoffen auf Polyurethanbasis als Träger in biologischen Reinigungsverfahren von Abwässern beschrieben. Es hat sich jedoch gezeigt, daß Leichtschaumstoffe üblicher Raumgewichte von 15 bis 35 kg/m$^3$, wie sie als Schaumstoffabfall im Handel sind, keinesfalls alleine als Trägermaterialien in Klärschlammbecken mit Erfolg benutzt werden können. Derartige Schaumstoffe schwimmen immer auf, führen zu Verstopfungen und sonstigen widrigen Charakteristiken ihres Verhaltens in Kläranlagen. Polyurethan-Weichschaumstoffe mit relativ hohen Gewichten von ca. 90 kg/m$^3$ sind zwar etwas günstiger, jedoch auch noch nach Monaten (siehe Vergleichsbeispiele) zu einem erheblichen Teil an der Oberfläche der Klärbecken schwimmend. Auch führen sie je nach Schichtdicke der Schaumstoffe zu Verstopfungen des Ablaufs oder werden sogar mit dem Ablauf ausgetragen. Derartig aufschwimmende Schaumstoffe sind für die Biomasse weitgehend unwirksam und ergeben vielfach wohl unüberwindliche technische Schwierigkeiten. Auch die Zugabe von Aktivkohle zu den Schaumstoffen bringen keine Vorteile, selbst dann nicht, wenn diese vorher in den Schaumstoff mechanisch eingequetscht werden.

Die biologische Umwandlung organischer Verunreinigungen mittels Bakterien unter Sauerstoffversorgung in überwiegend aus Kohlehydraten und Proteinen bestehenden Bakterienmassen in $CO_2$ und Wasser, ferner gegebenenfalls Nitrate, wird als aerobe Abwasserreinigung bezeichnet.

Die Umwandlung organischer Verunreinigungen, bevorzugt Kohlehydrate, Eiweiß und Fette ohne Sauerstoffzufuhr mittels säurebildender Bakterien, sulfatreduzierender Bakterien und methanerzeugender Bakterien unter Bildung von Schwefelwasserstoff, Kohlendioxid und insbesondere Methan wird als anaerobe Abwasserreinigung bezeichnet.

Die erfindungsgemäßen, hochgefüllten, hoch wasseraufnahmefähigen anionischen modifzierten Polyurethanmassen als Träger bewirken sowohl im ruhenden als auch im bevorzugt bewegten Zustand die verbesserte biologische Reinigung von Abwässern, besonders überraschend auch von Abwässern mit sehr geringer Konzentration an Schadstoffen, beispielsweise unter 500 mg/l, was für die Endreinigungsstufe in Kläranlagen zum einwandfreien Ablauf von geklärtem Wasser sehr wichtig ist.

Die erfindungsgemäße Reinigung kann deshalb in der ersten und/oder in nachgeschalteten weiteren Belebungsstufen erfolgen, indem man die Träger an beliebiger Stelle einem oder mehreren kombinierten Belebtschlammbecken zuführt. Da die erfindungsgemäßen, Polyurethan(harnstoff)massen als Träger trotz

ihres relativ geringen Anteils an Polyurethanen in hohem Grade in Wasser abriebfest sind, können sie sowohl in Klärbecken mit hoher Turbulenz als auch in Behältern mit nicht oder nur wenig bewegten Klärschlämmen eingesetzt werden, d.h. die hochgefüllten Polyurethan(harnstoff)massen können in entsprechenden Wirbel-, Fließ- oder Festbettanordnungen verwendet werden.

Durch Einleiten von Luft und/oder (reinem) Sauerstoff entsteht bei den in großem Umfang betriebenen aeroben Klärverfahren eine beträchtliche Turbulenz. Dadurch werden in einem sogenannten flüssigen Wirbelbett die hochgefüllten Polyurethanmassen und der Belebtschlamm lebhaft in Bewegung gehalten. Trotzdem bildet sich auf der Oberfläche und teilweise auch im Innern des hochgefüllten Polyurethans ein Bakterienrasen, der die im experimentellen Teil beschriebene, überraschend erhöhte Reinigungsleistung erzielt. Der im Polyurethan inkorporierte Füllstoff hat in mehrfacher Hinsicht einen vorteilhaften Einfluß auf das verbesserte Entsorgungsverfahren. Je nach Art der Füllstoffe und Art der Polyurethan-Matrix werden die mechanische Festigkeit und die Hydrophilie des Polyurethans verbessert und insbesondere überraschend die biologische Assimilationsfähigkeit der im Abwasser gelösten organischen Stoffe wesentlich erhöht. Außerdem ist der im anionischen Polyurethan eingebundene Füllstoff oder die Füllstoffmischung gleichzeitig ein Regulator für die Einhaltung optimaler, spezifischer Gewichte der für Wasser durchlässigen, erfindungsgemäß eingesetzten Träger, so daß in den üblichen, etwa 4 bis 12 m hohen, stark gefüllten Belebtschlammbecken eine gleichmäßige Verteilung der Träger mit schwacher Sinktendenz oder die Erhaltung eines schwebenden Zustandes möglich ist. Dies ist für die meisten der heute von den Kommunen oder der Industrie betriebenen, biologisch arbeitenden Kläranlagen und besonderer Bedeutung oder sogar eine verfahrenstechnische Voraussetzung.

Wie bereits erwähnt, können im Gegensatz dazu übliche, nicht erfindungsgemäß modifizierte schaumartige Kunststoffe mit makroporöser Struktur, einschließlich Polyurethan-Schaumstoffe, in der praktizierten Kläranlagentechnik nicht so wirkungsvoll und nicht wie erforderlich in mehrjährigem Dauerbetrieb gehandhabt werden, da diese Schaumstoffe selbst im Fall relativ hoher Raumgewichte von ca. 90 kg/m$^3$ noch nach Monaten zu erheblichen Anteilen an der Oberfläche der Klärbecken schwimmen und technische Schwierigkeiten (z.B. Verstopfungen) hervorrufen. Ganz unpraktikabel hat sich die Verwendung von Schaumstoffen üblich niedriger Raumgewichte von 20-35 kg/m$^3$ (sogenannte Abfallschaumstoffmischungen) herausgestellt. Diese Schaumstoffe schwimmen auch unter kräftigem Rühren an der Wasseroberfläche. In der erfindungsgemäßen, modifizierten Form können jedoch die Schaumstoff-haltigen Polyurethan(harnstoff)-Massen besonders gut geeignet eingesetzt werden.

Wie bereits ausgeführt, werden in einer speziellen Ausführungsform der Erfindung die Polyurethan(harnstoff)massen mit ihren Füllstoffen und gegebenenfalls Zusätzen so eingestellt, daß sie im Belebungsbecken der Kläranlage sofort oder innerhalb weniger Stunden absinken und trotz ausreichender Luft- und Sauerstoffdurchflutung als Trägermaterialien mit der nach einer gewissen Zeit beträchtlichen Menge anhaftenden Biomasse ein von sauerstoffhaltigem Gas durchströmtes Wirbel- oder Festbett mit überstehender Polyurethan-freier Wasserschicht bilden, das im Bedarfsfall, z.B. zum gelegentlichen oder kontinuierlichen Abführen von Überschußschlamm durch eine entsprechend starke Begasung verändert werden kann. Die erfindungsgemäß eingesetzten, hochgefüllten, hydrophilen Polyurethan(harnstoff)massen werden auch hierbei nicht ausgetragen.

Neben der weitverbreiteten aeroben biologischen Reinigung von Abwässern hat, insbesondere bei stark kohlehydrathaltigen Abwässern, beispielsweise in der Lebensmittel- oder Zellstoffindustrie, auch die anaerobe Abwasserreinigung eine große technische Bedeutung. Die erfindungsgemäß hergestellten und so verwendeten anionischen Polyurethanharnstoff-Trägermassen sind hervorragend geeignet, biologisch auch sehr hohe Schadstoffkonzentrationen von über 25.000 mg/l in einer Stufe der Abwasserreinigung zu bewältigen, oder auch bisher kaum abbaubare, organische Chlorverbindungen zu eliminieren. In manchen Fällen ist eine kombinierte anerobe und aerobe biologische Abwasserreinigung besonders wirkungsvoll. Auch hier sind die erfindungsmäßen, hochgefüllten, hydrophilen Polyurethan(harnstoff)-Träger günstig einzusetzen.

Der Grad der Hydrophilie wird bei den erfindungsgemäßen, hochgefüllten Polyurethan(harnstoff)massen bevorzugt so eingestellt, daß eine hohe Wasseraufnahme innerhalb von Stunden oder wenigen Tagen unter starker Quellung erfolgt oder eine größere Wassermenge bereits bei der Herstellung der Polyurethanmassen als disperse Phase vorliegt und somit die Träger bereits voll gequollen sind. Bei der anaeroben Klärtechnik wie auch der aeroben Abwasserreinigung können die erfindungsgemäßen Produkte größere Mengen gasförmiger Produkte wie Kohlensäure, Methan oder Schwefelwasserstoff gut entweichen lassen.

Der "in situ"-Einbau von Mikroorganismen in Polyurethane oder andere Kunststoffe ist, wie schon erwähnt, bei den für die Abwasserreinigung verwendeten Biomassen auch unter sehr schonenden und technisch aufwendigen Bedingungen ohne Verlust an vermehrungsfähigen Bakterien und starker Minderung der Bioaktivität praktisch nicht möglich und deshalb nicht bevorzugt. Bei der erfindungsgemäßen Verwendung erübrigt es sich auch, weil in den ausreagierten, hochgefüllten Polyurethan(harnstoff)-Trägern, überraschenderweise sogar im Wirbelbett, ein großer Teil der Bakterienkulturen einen festen Halt finden und sogar in die hochgefüllten, stark quellfähigen, hydrophilen Polyurethanmassen eindringen können und gegen mechanische Schädigung somit geschützt sind. Die Bakterien sitzen am gleichen Ort, an dem durch Adsorption die hochgefüllten Polyurethan(harnstoffe) eine erhöhte Konzentration an gelösten Schadstoffen bewirken.

Die Abbauleistung und Reinigungswirkung, d.h. die Verbesserung der Abwassergüte, nach dem erfindungsgemäßen Verfahren beschränkt sich nicht nur auf eine deutliche Verringerung des chemischen Sauerstoffbedarfs (CSB-Werte), sondern begünstigt auch eine drastische Reduzierung der Daphnien-Toxizität und Fisch-Toxizität, was zweifellos von mindestens ebenso großer Bedeutung ist. Außerdem wird eine weitgehende Beseitigung des in vielen Kläranlagen auftretenden üblen Geruchs und eine zusätzliche deutliche Farbaufhellung des geklärten Abwassers erreicht. Darüber hinaus kann die Kapazität einer vorhandenen biologischen Kläranlage deutlich gesteigert werden.

Die erfindungsgemäßen, hochgefüllten Polyurethan(harnstoff)massen als Träger verbessern auf zweierlei Weise die Reinigungsleistung biologischer Kläranlagen ganz entschieden. Durch die erfindungsgemäßen Träger können nicht nur allgemein Abwasserinhaltsstoffe an der Oberfläche der Träger aufkonzentriert werden, es können vielmehr gezielt auch Stoffe, beispielsweise Chlorkohlenwasserstoffe wie Ethylenchlorid, aus Abwässern angereichert werden, die sonst in ihrer gelösten Form und aufgrund ihrer geringen Konzentration neben anderen, gut abbaubaren Verbindungen von den Mikroorganismen des Belebtschlamms nicht verwertet werden können. Die Substratkonzentration solcher Verbindungen wird dafür auf den für den biologischen Abbau notwendigen Wert angehoben. Gleichzeitig siedeln sich auf den hochgefüllten Trägern Mikroorganismen an und vermehren sich aufgrund des gut angereicherten Substratangebotes optimal. Adsorptionsflächen für Substrate, d.h. für die im Abwasser enthaltenen organischen Verbindungen geringerer Konzentrationen werden nach der Umwandlung durch Bakterien wieder freigesetzt. Die Vorgänge Adsorption und Verwertung von gelösten Abwasserinhaltsstoffen an den Trägern, auf welchen die Mikroorganismen aufgewachsen sind, laufen kontinuierlich ab. Es bildet sich ein Gleichgewichtszustand zwischen Adsorption und Anreicherung der im wasser gelösten Stoffe und dem biologischen Abbau durch die an der Oberfläche der Träger gleichfalls angesiedelten Mikroorganismen. Dadurch wird eine fortlaufende Regeneration der Oberfläche erreicht. Ebenso bildet sich in Abhängigkeit vom Substratangebot ein Gleichgewicht zwischen Biomassen-Wachstum auf den hochgefüllten Polyurethan(harnstoff)massen und Elimination der Stoffe, so daß ständig eine erhöhte Biomassen-Aktivität an den Trägern erhalten bleibt.

Es ist möglich, mit Hilfe der erfindungsgemäßen Träger die Belebtschlammkonzentration in biologischen Kläranlagen deutlich zu erhöhen, zumeist mindestens zu verdoppeln und damit die Raum-Zeit-Belastung zu vervielfachen, so daß die Kapazität vorhandener Kläranlagen erheblich erhöht wird oder bei Neuanlagen kleinere Beckenvolumina ausreichen.

Eine einfache technische Anwendung der Träger besteht in der Zugabe in ein konventionelles, biologisches Belebungsbecken. Durch die Gas/Flüssigkeitsströmung werden die Trägerteilchen in Schwebe gehalten und im Belebungsraum gleichmäßig verteilt. Die hochgefüllten Polyurethan-Träger können aufgrund ihrer extrem hohen Abriebfestigkeit problemlos auch mit Oberflächen-Belüftern ausgestatteten Belebungsbecken eingesetzt werden.

Besonders vorteilhaft wirkt sich der Einsatz bei der Nitrifizierung und Denitrifizierung von Abwässern aus, da die hierfür notwendigen Mikroorganismen langsam und vorzugsweise auf Aufwuchsflächen wachsen.

Für den aeroben Bereich der Abwässerreinigung können diese Anlagen auch als Wirbelbett-Reaktoren oder als Festbett-Reaktoren betrieben werden. Die Durchstromung im Festbett kann sowohl von unten nach oben als auch von oben nach unten erfolgen. Ebenso ist der Betrieb als Tropfkörper möglich. Die hochgefüllten Polyurethanmassen werden wegen ihrer besonders großen Oberfläche auch als Bewuchsfläche (Tauchtropfkörper) vorteilhaft eingesetzt.

Für die Anwendung im Bereich der Abwasserreinigung stehen für die hochgefüllten, erfindungsgemäß einsetzbaren anionischen Trägermassen mehrere Möglichkeiten zur Auswahl. Die Anlagen können sowohl im Fließ- oder Wirbelbett als auch im Festbett betrieben werden. Bei einer Festbett-Fahrweise können die hochgefüllten anionischen Polyurethanmassen als Granulat oder als feste Einbauten eingesetzt werden, wie z.B. in Form von ausgerollten Matten oder vorgefertigten Einschüben. Auch hier kann die Durchströmung im Festbett sowohl von unten nach oben wie auch umgekehrt erfolgen. Die Betriebsweise wird im allgemeien von der jeweiligen Beschaffenheit und Besonderheit des Abwassers abhängig durchgeführt.

Der technische Fcrtschritt der erfindungsgemäßen Verwendung ist fernerhin und insbesondere darin zu sehen, daß mit den hochgefüllten Polyurethan(harnstoff)massen als Träger sogar konventionell biologisch vorgereinigte Abwässer wirkungsvoll noch von solchen Schadstoffen befreit werden können, die einen

relativ sehr großen Anteil schwer abbaubarer, organischer Restmengen enthalten, den die Mikroorganismen in einer konventionellen biologischen Anlage aufgrund des Verdünnungsgrades ihrer langsamen Vermehrung und Gefahr des Auswaschens nicht mehr abbauen können.

Mit den erfindungsgemäßen Trägern kann auch eine Reinigung von Abluft von organischen Bestandteilen, z.B. Abluft von Kläranlagen oder der Abluft von Produktionsprozessen organischer Verbindungen, durch ein- oder mehrfaches Durchsaugen oder in Kontakt mit feuchten oder nassen, bzw. in Wasser suspendierten, hochgefüllten Polyurethanharnstoff-Trägermassen erfolgen.

Beispielsweise wird durch eine oder mehrere, in Reihe geschalteten Säulen, die mit dem erfindungsgemäß einsetzbaren Polyurethanharnstoff-Trägermassen in eine auf 50 bis 80 Vol.-% verdichteten Packung gefüllt sind und gegebenenfalls mit geeigneten Mikroorganismen-Suspensionen für den biologischen Abbau versetzt werden, gleichzeitig (z.B. von oben) Abluft eingeleitet und mit Wasser berieselt. Nach Verweilzeiten von etwa 5 bis 60 Sekunden erfolgt bereits eine hohe biologische Eliminierung von organischen Schadstoffen, die nach einer relativ kurzen Startperiode zu einer lebhaften Vermehrung von abbauenden Mikroorganismen führt. Auch bei diesem ökonomisch günstigen Prozeß wird wie in wäßrigen Suspensionen, in einem physikalisch-biologischem Gleichgewicht die Adsorption der Schadstoffe und deren Abbau in Gegenwart eines Feuchtigkeitsfilms auf und in der Trägermasse gleichzeitig und am gleichen Ort vollzogen. Der Überschuß an zuwachsenden Mikroorganismen kann durch gelegentliches, ein- oder mehrmaliges Füllen der Bioreaktor-Säulen mit Wasser und kräftiges Durchblasen von Luft abgezogen werden.

Die Entsorgung der erfindungsgemäß verwendeten Trägermassen ist wegen ihres inerten Charakters problemlos. So können diese beispielsweise in Kläranlagen, in denen der Überschußbelebtschlamm in einem Wirbelschichtofen verbrannt wird, während eines jahrelangen Langzeitgebrauchs gegebenenfalls mit dem Überschußbelebtschlamm ausgetragen werden und als Energieträger mitverbrannt werden. Im allgemeinen ist ein Austausch des gesamten Trägermaterials jedoch nicht erforderlich.

Eine weitere, wichtige Verwertung liegt in ihrer Verwendung als Träger für Bakterien oder Enzyme in Biokonversionsprozessen zur Herstellung komplizierter organischer Verbindungen. Die stückigen Träger können von den Reaktionsbrüden oder Fermentationsbrüden durch Filtration leicht abgezogen werden, beispielsweise zur Herstellung von Zitronensäure aus Stärke, zur Hydrolyse von Penicillin G mittels Acylasen zu 6-Aminopenicillansäure, ferner zur Herstellung von stereospezifischen, biologisch aktiven Verbindungen, oder zur Vergärung von zuckerhaltigen Wässern in der Rübenzuckerindustrie.

Die Verwendung der erfindungsgemäßen, bevorzugt Schaumstoffe- und Braunkohle- oder Torf-haltigen, anionisch modifizierten Polyurethan(harnstoff)-Trägermassen liegt in ihrer hochhydrophilen Eigenschaft und ist gegebenenfalls in ihrer leicht porigen Struktur begründet. Man kann sie deshalb auch als Bodenverbesserer oder Spezialwachstumsträger hydrophiler, leicht bewurzelungsfähiger Art für Pflanzen benutzen, da sie beliebige Pflanzennährstoffe enthalten können, einen sehr lange verwertbaren Wassergehalt und gegebenenfalls Düngergehalt aufweisen und leicht wieder rückquellen.

Den Trägermassen können bei der Herstellung auch Samen zugemischt werden, die dann zum Keimen gebracht werden und in z.B. Plattenformen, beispielsweise als Petersilienrasen verwertbar sind oder in kleinstückiger Form als Setzlinge mit PU-Trägerstücken eingesetzt werden können.

Die stückigen Träger können ferner als Filtriermedium für feinteilige Verunreinigungen, in Wasser benutzt und, beispielsweise durch Rückspülen, regeneriert werden. Eine besonders wirkungsvolle Verwendung finden die erfindungsgemäßen Träger als Adsorbentien für (Roh)Öl oder andere, nicht wasserlösliche organische Flüssigkeiten.

Die erfindungsgemäß bedeutsamste Verwendung finden die insbesondere stückigen, anionisch-modifizierten Polyurethan(harnstoff)-Trägermassen in der aeroben oder anaeroben Abwasserreinigung, einschließlich der Nitrifizierung bzw. Denitrifizierung von Abwässern, da hier die relativ langsam wachsenden nitrifizierend bzw. denitrifizierend wirkenden Biomassen (z.B. geeignete Bakterien) an den Trägermassen wirksam festgehalten werden und keine unerwünschte Ausspülung erfolgt.

## Ausführungsbeispiele:

### Charakterisierung dar anionischen, füllstoffhaltigen Polyurethan(harnstoff)-Massen als Träger

Das erhaltene, gegebenenfalls granulierte Trägermaterial wird mit überschüssigem Wasser versetzt, 24 Stunden (bei Raumtemperatur) vollständig gequollen und nach dem Aufrühren das darüber stehende Wasser abdekantiert. Der hieraus abgeleitete Wert, der die Gewichtsprozentmenge Wassers im und zwischen dem gequollenen Träger (füllstoffhaltigem Polyurethanharnstoff) angibt, wird hier als Wasseraufnahmefähigkeit (WAF) bezeichnet (siehe nähere Erläuterung weiter unten).

Der Feststoffgehalt der so hergestellten wäßrigen Suspension des Granulats in Form eines nunmehr

stark gequollenen Trägermaterials beträgt (für das Beispiel 1) 96 g Feststoff pro Liter "Suspension" (ohne überstehendes Wasser).

Der Feststoffgehalt in einem Liter einer derartigen Suspension (ohne überstehendes Wasser) wird als Trockensubstanz der Suspension (abgekürzt TS(S)) bezeichnet.

Das Gewicht von einem Liter dieser Suspension des stark gequollenen Trägermaterials (ohne überstehendes Wasser) wird als Suspensionsgewicht (abgekürzt SG) bezeichnet.

Aus dem Gewicht von einem Liter der Suspension (SG) und dem Wert der darin enthaltenen Trockenmasse des Trägers (TS-S) wird der Wert des sogenannten Suspensionsfaktors (F4) abgeleitet. Der Wert des Suspensionsfaktors F4 minus 1 (F4-1) gibt an, die wievielfache Menge Wasser (bezogen auf Trägertrockensubstanz) in der Suspension insgesamt (als Quellwasser und als Wasser in den Zwischenräumen in oder zwischen den Trägerpartikeln) sich befindet.

Der Wert des Suspensionsfakters F 4 wird in Praxis dadurch bestimmt, daß man die Trägertrockenmasse von einem Liter einer Suspension der Träger in Wasser (ohne überstehendes Wasser) bestimmt und das Gewicht der Suspension (SG) durch das Gewicht der darin enthaltenen Trägertrockenmasse (TS(S)) dividiert:

$$F\,4 = \frac{SG}{TS(S)}\,.$$

Aus diesem Wert des Suspensionsfaktors F4 kann die Wasseraufnahmefähigkeit (WAF) als Charakteristikum für die erfindungsgemäß zu verwendenden Trägermassen nach folgender Formel bestimmt werden:

$$WAF = \frac{F4 \text{ minus } 1}{F4} \,.\, 100; \quad (\text{in } \%)$$

Dieser Wert der Wasseraufnahmefähigkeit (WAF) in Gew.-% ausgedrückt, gibt ein anschauliches Bild für den Zustand der hochgequollenen und gegebenenfalls wasseraufnehmende Zwischenräume tragenden Trägermassen wieder, wie sie in dem gequollenen Zustand in der Kläranlage verwendet werden. Im Beispiel 1 beträgt beispielsweise der Trockensubstanzgehalt von 1 Liter der Suspension ohne überstehendes Wasser 96 g Feststoff. Bei einem Suspensionsgewicht von 1015 g pro Liter Suspension erreicht sich hieraus der Suspensionsfakter

$$F4 = \frac{1015}{96} = 10.6.$$

Ein Gewichtsteil Trockensubstanz der Trägermasse wird somit mit der 9,6-fachen Wassermenge in die beschriebene gequollene Suspensionsform überführt. Anders ausgedrückt, beträgt der Wert der Wasseraufnahmefähigkeit 9,6 durch 10,6 mal 100 = 90,3 %.

S1. Schüttgewicht, abgetropft:
Die Trägermasse wird 24 Stunden in einer großen überschußmenge an Wasser suspendiert, danach wird mit dieser gequollenen Masse ein Sieb mit 2 mm Sieblöchern 10 cm hoch gefüllt und 1 Stunde abtropfen gelassen; die verbleibende Füllmenge wird danach in einem Meßgefäß gewogen und auf das Schüttgewicht pro Liter umgerechnet.

S2. Schüttgewicht, ausgequetscht:
Die nach S1 abgetropfte Trägermasse wird auf einem 1 mm Sieb 5 Minuten lang einem Druck von 3 bar ausgesetzt und danach in einem Meßgefäß gewogen. Nach Umrechnung auf einen Liter wird das Schüttgewicht S2 ermittelt.

S3. Schüttgewicht, getrocknet:
Die feuchte, ausgequetschte Trägermasse wird (etwa) 1 Tag bei 100° unter Vakuum bis zur Gewichtskonstanz getrocknet und in einem Meßgefäß wie oben ausgewogen.

Im oben angeführten Beispiel betragen die so bestimmten Werte von S1 bis S3:

S1 (abgetropft) 515 g/l
S2 (ausgequetscht) 503 g/l
S3 (getrocknet) 239 g/l.

Zur besseren Vergleichbarkeit der Werte werden noch folgende Faktoren definiert:

F1: Der Volumenfaktor, ist der Quotient aus dem Gewicht der in Wasser gequollenen, abgetropften Probe pro Liter und der ermittelten Gewichtsmenge Trockensubstanz aus einem Liter wäßriger Suspension (TS(S)).

$$F1 = \frac{S1}{TS(S)}$$

F2: Der Quetschfaktor ist entsprechend der Quotient der ausgequetschten Probe pro Liter (Schüttgewicht S2) und der Trockensubstanzmenge pro Liter Suspension.

$$F2 = \frac{S2}{TS(S)}.$$

F3: Der Quellfaktor ist der Quotient aus der Gewichtsmenge der abgetropften Probe (S1) und die nach vollständiger Entfernung des Wassers aus der abgetropften Probe ermittelten Gewichtsmenge der Trockenmasse (TS(S1)).

$$F3 = \frac{S1}{TS(S1)}$$

Die Volumen-, Quetsch- und Quellfaktoren sollen mindestens 2, bevorzugt mindestens 3, besonders bevorzugt mindestens 4 betragen. Die Obergrenzen der genannten Faktoren liegen etwa unterhalb 20, bevorzugt unter 15. Außerdem sollen sich die drei Faktoren der gleichen Probe möglichst wenig unterscheiden, d.h. maximal nur um das dreifache, bevorzugt nur um das doppelte unterschiedlich sein.

In den Beispielen wurden die Bestimmungen des chemischen Sauerstoffbedarfs nach DIN 38409-Teil 41 (Dezember 1980), der Fischtoxizität nach DIN 38412-Teil 15 (Juni 1982), der Daphnientoxizität nach DIN 38412-Teil 11 (Oktober 1982) und des Geruchsschwellenwertes nach den deutschen Einheitsverfahren zur Wasseruntersuchung, Loseblatt-Sammlung, Ausgabe 1982, Verlag Chemie-Weinheim, vorgenommen.

## Ausführungsbeispiele

### A) Allgemeine Verfahrensweise zur Herstellung der Trägermassen

#### A1a) Herstellung der NCO-Prepolymeren, diskontinuierliches Verfahren für die Patentbeispiele 1 und 3-7

Die Herstellung der NCO-Prepolymeren erfolgt in an sich bekannter Weise in einer Rührapparatur durch etwa 1- bis 3-stündiges Erhitzen der Ausgangskomponenten (höhermolekulare Polyhydroxylverbindung, gegebenenfalls niedermolekulare Polyole, gegebenenfalls tertiären Stickstoff enthaltende Polyole und Polyisocyanate) bei Temperaturen von etw 70 bis 90° C, bis annähernd der berechnete NCO-Gehalt erreicht ist. Zusammensetzung siehe Tabelle 1).

#### A1b) Herstellung des NCO-Prepolymeren, vollkontinuierliches Verfahren für Patentbeispiel 2

Die entwässerte Mischung der linearen und verzweigten hydrophoben Polyetherpolyole, Zusammensetzung siehe Tabelle 1, wird ca. 90 bis 110°C heiß mit dem auf Raumtemperatur belassenen Toluylendiisocyanat-Isomerengemische in einem Durchflußmischer, d.h. einem mit Stacheln im Stator und Rotor ausgerüstetem Stachelrührermischer mit hoher Drehzahl, vereinigt und mit einer mittleren Verweilzeit von ca. 20 Sekunden in einer stark exothermen Polyadditionsreaktion so weit umgesetzt, daß der Isocyanatgehalt unter 7,5, bevorzugt unter 6,5 Gew,-%, liegt und direkt über zwei parallel geschaltete Brauseköpfe mit je ca. 100 Löchern von je 1 mm Durchmesser in die Eintragsöffnung des Doppelpaddelschneckentroges, siehe allgemeine Vorschrift A3), eingeleitet. Hier erfolgt eine sofortige Vereinigung mit den übrigen Komponenten, siehe Tabelle 2, so daß innerhalb von etwa 3 Minuten bei 80 bis 90°C das erfindungsgemäße, hochgefüllte Polyurethanharnstoff-Trägermaterial entsteht und die Reaktion weitgehend abgeschlossen ist.

Tabelle 1 Zusammensetzung und Charakterisierung der NCO-Prepolymeren (PP)

| Typ | Viskosität mPa.s/25°C | % NCO | Isocyanat Menge | Isocyanat Art | Polyetherpolyol Menge | Polyetherpolyol Art | NM | SS |
|---|---|---|---|---|---|---|---|---|
| IPP | 2.600 | 6.0 | 15.1 | TDI | 84.9 | PHILV | - | |
| OPP | 2.400 | 5.9-7,5 | 15.3 | TDI | 46.2 | PHOBV | - | |
| | | | | | 38.5 | PHOBL | | |
| BOPP*) | 15.600 | 5.7 | 20.6 | TDI | 76.3 | PHOBV | 3,1 | 0,2 |

*) enthält 260 Milliäquivalente tert.-Stickstoff pro 1.000 g BOPP.

Typ = Charakterisierung der NCO-Prepolymeren (PP)
B = Basisch mit tert. Stickstoff, zur Kationenbildung befähigt
I = Hydrophil
O = Hydrophob
(Mengenangaben in Gewichtsteilen)

Die Mengenangaben in der Tabelle 1 erfolgen in Gewichtsteilen. Eingesetzte Isocyanate:

TDI = Toluylendiisocyanat-2,4-, -2,6-Isomerengemisch 80:20

Polyetherpolyole:

PHILV = hydrophile, verzweigter Polyether, gestartet auf Trimethylolpropan, umgesetzt mit 40 Teilen Propylenoxid und 60 Teilen Ethylenoxid, OH-Zahl 26.

PHOBV = hydrophober, verzweigter Polyether, gestartet auf Trimethylolpropan mit 80 Teilen Propylenoxid und danach 20 Teilen Ethylenoxid umgesetzt, OH-Zahl 28.

PHOBL = hydrophober, linearer Polyether aus 1,4-Butandiol und Propylenoxid, OH-Zahl 56.

Verbindung mit tertiärem Stickstoff:

NM = N-Methyl-diethanolamin
Stabilisierungsmittel (partielle Salzbildung):
SS = konzentrierte Schwefelsäure

A2) Umsetzung der NCO-Prepolymeren zu den Trägermassen entsprechend Patentbeispielen (allgemeine Verfahrensvorschrift zur diskontinuierlichen Herstellung)

Die vorgefertigten Schaumstoffteile und/oder Füllstoffe werden in der angegebenen Menge Wasser suspendiert oder das wasser in die Schaumstoffe/Füllstoffe eingerührt und dann das NCO-Prepolymer schnell und intensiv eingemischt. Im Falle der stark hydrophilen NCO-Prepolymeren erstarrt das Reaktionsgemisch bei Raumtemperatur schon nach wenigen Minuten, z.B. 1 bis 3 Minuten, bei den hydrophoben NCO-Prepolymeren jedoch erst nach 1 bis 8 Stunden. Die Reaktionszeit wird gegebenenfalls durch Zugabe von 0,1 bis 0,5 Gew.-% Katalysator, bezogen auf Prepolymermenge, und/oder durch Verwendung von heißem Wasser (ca. 80 bis 90 °C) auf 1-2 Minuten verkürzt. Die Umsetzung erfolgt in üblichen Rührapparaturen (bei Laboransätzen); für technische Mengen werden vorzugsweise mit pflugscharähnlichen Mischwerkzeugen ausgerüstete, horizontal aufgestellte, konventionelle Mischgeräte eingesetzt.

Zur Anionenbildung fügt man dem Prepolymer oder der wäßrigen Füllstoffmischung die berechnete Menge an Anionengruppen oder zur Anionbildung befähigte Verbindungen zu, soweit diese noch nicht im Prepolymeren enthalten sind.

Hydrophobe NCO-Prepolymere können in einer speziellen Ausführungsform beispielsweise mit Hilfe eines Durchflußmischers mit einem sehr schnell reagierenden Diaminosulfonat in Wasser emulgiert und innerhalb Sekunden mit dem Füllstoff und/oder Schaumstoff-Teilchen vereinigt werden.

Die so hergestellten, erfindungsgemäßen Trägermassen sedimentieren je nach Zusammensetzung verschieden schnell, aber vollständig in Wasser.

A3) Allgemeine Vorschrift für die kontinuierliche Verfahrensweise (KV)

Als Apparatur dient ein Doppelpaddel-Schneckentrog mit einem Fassungsvolumen von ca. 180 1 und einer Länge von ca. 300 cm, die mit einem Heizmantel für Warmwasser oder Dampf ausgerüstet ist und dessen Paddelwellen sich gegenläufig drehen. Die Produktförderung erfolgt zwangsweise von der Eintragsöffnung in Richtung Austragsöffnung, wobei zwischen den Paddelwellen eine gewisse Knetung bzw. Ouetschung des Reaktionsgemisches erfolgt. Der zerkleinerte Polyurethanschaumstoff und die Füllstoffe und anderen Zusätze werden vorzugsweise getrennt über Dosierschnecken in den Schneckentrog gefördert. An gleicher Stelle wird mittels Kolbenpumpen das Wasser und mittels Zahnradpumpen das NCO-Prepolymer eingetragen. Es ist zweckmäßig, hydrophobe NCO-Prepolymere wie oben beschrieben in ihrer anionischen Form in der etwa 2-fachen Menge Wasser von etwa 10 bis 25 °C in einem Durchflußmischer oder statischen Mischer innerhalb von 2 bis 5 Sekunden intensiv zu vermischen, weil dadurch die Füllstoffe, insbesondere der vorgetrocknete Braunkohlenstaub oder die Aktivkohle außerordentlich schnell und gleichmäßig mit der getrennt zudosierten Restmenge des (gegebenenfalls bis 90 °C erhitzten) Wassers benetzt wird und die NCO-Prepolymeren in feinstverteilter Form die Feststoffe und Schaumstoffe gleichmäßig umhüllen und binden.

In den meisten Fällen genügt eine Verweilzeit im Schneckentrog von ca. 1-8 Minuten, bevorzugt wird eine solche von etwa 2 Minuten eingestellt. Das gegebenenfalls mit Katalysatoren und/oder erhöhter Temperatur hergestellte Material wird durch eine am Ende des Troges unten befindliche Öffnung in Behälter ausgetragen und gegebenenfalls direkt gewaschen und gegebenenfalls zu einem beliebigen Zeitpunkt in Wasser suspendiert oder zur vollständigen Quellung mit Wasser besprüht.

A4) Vergleichsbeispiele (nicht erfindungsgemäß)

Es werden Reaktionen der NCO-Prepolymeren (deren Zusammensetzung siehe Tabelle 1) in Überschußmengen Wasser, jedoch ohne Verwendung von Schaumstoffen oder anderen Füllstoffen zu Polyurethanharnstoffen umgesetzt.

a) Verwendung hydrophiler anionischer NCO-Prepolymerer

Rührt man hydrophile, anionische NCO-Prepolymere oder NCO-Prepolymere, die mit einem Diaminosulfonat zumindest teilweise kettenverlängert worden sind, bei Raumtemperatur mit der 0,5- bis 5-fachen Gewichtsmenge Wasser (wie dies bei den erfindungsgemäßen Patentbeispielen auch erfolgt, jedoch dort meistens unter Zusatz von Schaumstoffteilchen und/oder gegebenenfalls anderen Füllstoffen), so erhält man zunächst eine wäßrige Suspension, aus der innerhalb von 10 Sekunden bis 2

Minuten in bekannter Weise ein PU-Schaum-Gel mit geschlossener Zellstruktur gebildet wird, das in zerkleinerter Form auch nach wochenlanger Lagerung im Wasser aufschwimmt, d.h. sich nicht absetzt und das somit nach der Fließ- oder Wirbelbett-Technik als Träger beispielsweise bei der biologischen Abwasserreinigung nicht verwendbar ist. Bei 50 °C und darüber erfolgt die Schaum-Gel-Bildung noch schneller, wobei der Anteil geschlossener Zellen noch größer ist, was eine Anwendbarkeit noch weiter verschlechtert.

b) Verwendung hydrophober, anionischer NCO-Prepolymerer bzw. anionisierbarer NCO-Prepolymerer

In der doppelten bis 5-fachen Menge Wasser reagieren die anionischen, hydrophoben NCO-Prepolymeren bei Raumtemperatur deutlich langsamer und lassen sich zunächst in Wasser fein suspendieren, wobei allerdings schon innerhalb von 1 bis 2 Minuten deutlich Schlieren auftreten und sehr schnell klebrige Agglomerate entstehen.

Bei Temperaturen bei 50 °C und darüber erfolgt die Agglomeratbildung schon innerhalb von 20 Sekunden.

c) Verwendung hydrophober, nichtionischer NCO-Prepolymerer

In großen Überschußmengen Wasser ist eine Dispersion der NCO-Prepolymeren nicht möglich, vielmehr tritt bereits bei Raumtemperatur sofort eine Verfestigung zu einer mehr oder weniger klebrigen Masse ein, die allmählich erstarrt.

Beispiel 1 (Ausführliches Herstellungsbeispiel)

Trägermasse

6,68 Gew.-Teile eines Weichschaumstoffgranulats WSB-14 und 11,05 Gew.-Teile einer nativen thermisch stark entwässerten Braunkohle aus dem Aachener Braunkohlerevier mit 9 % Restfeuchte, welche zu Teilchen unter 100 µm zerkleinert wurde und somit als Braunkohlenstaub vorliegt, werden in 80 Gew.-Teilen Wasser von 18 °C, in dem 0,08 Gew.-Teile Diaminosulfonat der Formel

$H_2N \cdot CH_2 \cdot CH_2 \cdot NH \cdot CH_2 \cdot CH_2 \cdot SO_3 \cdot Na$

nachfolgend AAS bezeichnet, gelöst sind, verrührt und nach dem allgemeinen Herstellungsverfahren A2, wie oben angegeben, mit 3,2 Gew.-Tln NCO-Prep. (siehe Tabelle 1) verrührt. Es entsteht ein Trägermaterial in Form eines wassergequollenen, sich feucht anfühlenden, leicht elastischen Feststoffes, der weitgehend in Stücken mit einer Größe unter 12 mm verbleibt und im allgemeinen nicht weiter zerkleinert werden muß. Das feste, mit Schaumstoff und Braunkohle gefüllte anionische Polyurethan(harnstoff)-Trägermaterial enthält 50,2 g Braunkohlen-Trockensubstanz und 33,4 g PUR-Schaumstoff in 100 g wasserfrei angenommener Trägermasse (aus wasserfrei berechneter Braunkohle, PUR-Schaumstoff und wasserfrei angenommener Polyurethanharnstoffe), folglich 83,6 Gew.-% an Schaumstoff plus Braunkohle, bezogen auf Trockenmasse des gefüllten Polyurethan(harnstoff)-Trägers.

Das erhaltene Trägermaterial wird nun mit überschüssigem Wasser versetzt, 24 Stunden (bei Raumtemperatur) vollständig gequollen und gegebenenfalls das darüber stehende Wasser abdekantiert. Der hieraus abgeleitete Wert, der die Gewichtsprozentmenge Wassers im und zwischen dem gequollenen Träger (füllstoffhaltigem Polyurethanharnstoff) angibt, wird hier als Wasseraufnahmefähigkeit (WAF) bezeichnet.

Im Beispiel 1 beträgt beispielsweise der Trockensubstanzgehalt von 1 Liter der Suspension ohne überstehendes Wasser 96 g Feststoff. Bei einem Suspensionsgewicht von 1015 g pro Liter Suspension errechnet sich hieraus der Suspensionsfakter

$$F4 = \frac{1015}{96} = 10,6.$$

Ein Gewichtsteil Trockensubstanz der Trägermasse wird somit mit der 9,6-fachen Wassermenge in die beschriebene gequollene Suspensionsform überführt, Anders ausgedrückt, beträgt der Wert der Wasseraufnahmefähigkeit 9,6 durch 10,6 mal 100 = 90,3 %.

Zur weiteren Charakterisierung der Trägermassen werden noch die Schüttgewichte S1 bis S3 (in g/l) nach unterschiedlichen Behandlungsarten bestimmt.

Im oben angeführten Beispiel betragen die so bestimmten Werte von S1 bis S3:

S1 (abgetropft: 531 g/l

S2 (ausgequetscht) 322 g/l
S3 (getrocknet) 136 g/l.

Die Werte der Volumen-, Quetsch- und Quellfaktoren F1 bis F3 von Beispiel 1 sind in Tabellen 2 und 3 tabellarisch miterfaßt.

1. Charakteristik des (Patentbeispiele 1 bis 4 und 6 bis 7) als Füllstoff verwendeten PUR-Schaumstoffes: Bei dem Weichschaumstoff WSB 14 wurden Mischungen von Abfällen verschiedener Raumgewichte (von ca. 15 bis ca. 110 kg/m³) aus der großtechnischen Polyether-Polyurethan-Block- und Formschaumstoff-Produktion verwendet.

WSB-14:

Das Trockenschüttgewicht des überwiegend aus Blockschaumstoff-Abfall bestehenden Weichschaums beträgt etwa 14 g/l. Teilchengröße von 1 mm bis 12 mm. Schüttgewichte nach Suspendierung in Wasser S1: 263 g/l; S2: 101 g/l; S3: 14 g/l; TS-S (Gehalt an Trockensubstanz in Wassersuspension): 12,5 g/l Suspension.

2. Vergleichsversuche mit unmodifizierten Schaumstoffen:

Nicht mit Polyurethanvorprodukten gebundene PUR-Schaumstoffe üblicher Rohdichten sind für die biologische Abwasserreinigung in der Praxis völlig unbrauchbar, da die Schaumstoffe obenauf schwimmen.

Auch bei einem weiteren Vergleichsversuch in einer Rührapparatur mit einem auf eine Größe unter 12 mm zerkleinerten, einheitlichen Blockweichschaum relativ hoher Dichte (Schüttgewicht 36 g/l; Raumgewicht 90 g/l) schwamm sogar noch nach drei Monaten Wasserlagerung bei kurzer Unterbrechung der Rührwirkung der größte Teil des Materials sofort obenauf. Die Anwendung eines Wirbelbettes war mit diesem Schaumstoff nicht möglich, da sie obenauf schwimmen und außerdem spröde sind und zu Abrieb führen.

3. Herstellung des erfindungsgemäßen Trägermaterials (ausführliche Darstellung des Verfahrens A/2)

Die Herstellung der in den Patentbeispielen 1 und 3 bis 7 verwendeten, hochgefüllten Polyurethan-(harnstoff)-massen erfolgt etwa bei Raumtemperatur in diskontinuierlicher Weise entweder in einem Intensivmischer, der aus einem zylindrischen Behälter besteht, der auf einem drehbaren Teller schräg befestigt ist und mit einem exentrisch einbringbaren Rührwerk ausgestattet ist, das in entgegengesetzter Richtung zur Tellerdrehung läuft, oder man verwendet horizontal montierte Mischer, die mit pflugscharähnlichen Werkzeugen ausgerüstet sind.

Der zerkleinerte Polyurethanschaumstoff-Abfall und die erforderliche Wassermenge werden vorgelegt, dann der Füllstoff, z.B. Braunkohle, gleichmäßig eingemischt sowie gegebenenfalls das Diaminsulfonat und danach in feinen Strahlen das NCO-Prepolymer mit Hilfe einer Zahnradpumpe zudosiert. Gegebenenfalls erfolgt ein Vormischen des NCO-Prepolymers und des Diolsulfonats unter Ausbildung eines wäßrigen Emulsion. Das Rühren wird, nachdem alle Komponenten eingemischt sind, nach wenigen Minuten abgebrochen und das Trägermaterial in etwa 10 bis 30 cm hoher Schicht 10 bis 90 min. ausgebreitet, bis die Isocyanatreaktionen weitgehend beendet sind.

Das Trägermaterial wird gegebenenfalls mit Wasser mehrmals gewaschen und kann danach direkt oder zu einem späteren Zeitpunkt eingesetzt werden.

Die Zusammensetzung der Träger nach den Beispielen 1 bis 7 sind in der Tabelle 2 wiedergegeben.

4. Eigenschaften der erfindungsgemäßen Trägermassen nach den Beispielen 1 bis 7 (siehe Tabelle 3).

Beispiele 1 bis 7 (siehe Tabelle 2)

Hochgefüllte, langsam sedimentierende Polyurethan(harnstoff)massen mit oder ohne Polyurethan-Weich-Schaumstoffabfällen, weiteren Füllstoffen, NCO-Verbindungen und Diaminosulfonat AAS

Ausführungsform siehe z.B. Beispiel 1; Zusammensetzung der verwendeten NCO-Prepolymeren siehe Tabelle 1; Mengenverhältnisse bei der Umsetzung und Ergebnisse siehe Tabellen 2 und 3.

Zur besseren Übersicht wurde die als Beispiel 1 bereits ausführlich beschriebene anionische PUR(HS)-Masse in den Tabelle 2 und 3 mit aufgenommen.

Tabelle 2 Zusammensetzung der hochgefüllten Polyurethan(Polyharnstoff)-Trägermassen für die Patentbeispiele 1 bis 7 (diskontinuierliches Herstellungsverfahren nach A)2., außer in Beispiel 2, welche kontinuierlich nach A)3. hergestellt wurde).

| Patent-beispiele | Füllstoffe: (Abfall)Schaumstoff Menge | Typ | Sieb-größe (mm) | Füllstoffe: andere Füllstoffe Menge | Art | Sieb-größe (µm) | NCO-Prepolymer Menge | Art | % NCO-geh. | Wassermenge | Temp. °C |
|---|---|---|---|---|---|---|---|---|---|---|---|
| 1 | 6,68 | WSB-14 | 12 | 10,4 | BKS | 100 | 3,2 | IPP | 6,0 | 80 | 40 |
| 2 | 14,50 | WSB-14 | 12 | 25,0 | BKS | 100 | 10,0 | OPP | 5,9 | 50 | 55 |
| 3 | 15,00 | WSB-14 | 6 | 9,6 | BKS | 100 | 7,5 | OPP | 5,9 | 50 | 45 |
| | | | | 17,5 | Fe 1 | | | | | | |
| 4 | 14,50 | WSB-14 | 12 | 15,0 | BKK | 100 | 6,7 | OPP | 5,9 | 50 | 80 |
| | | | | 10,0 | BKS | | 3,3 | BOPP | 5,5 | | |
| 5 | ohne | | | 32 | BKS | 100 | 8,0 | IPP | 6,0 | 60 | 65 |
| 6 | 10,26 | WSB-14 | 12 | 9,0 | AK | 10 | 10,23 | OPP | 6,0 | 70 | 50 |
| 7 | 10,36 | WSB-14 | 12 | 9,0 | AK | 10 | 10,23 | IPP | 5,9 | 70 | 50 |

Tabelle 2 (Fortsetzung)

| Patentbeispiele | Zusatz | | Trockensubstanz | Schüttgewichte | | |
|---|---|---|---|---|---|---|
| | Menge | AAS | (g/l) Suspension (TS(S)) | abgetropft S1 | ausgequetscht S2 | getrocknet S3 |
| 1 | 0,05 | | 96 | 531 | 322 | 136 |
| 2 | 0,50 | | 66 | 370 | 239 | 77 |
| 3 | 0,40 | | 68 | 313 | 181 | 85 |
| 4 | 0,50 | | 60 | 371 | 218 | 77 |
| 5 | 0,40 | | 98 | 643 | 635 | 312 |
| 6 | 0,51 | | 67 | 554 | 284 | 79 |
| 7 | 0,51 | | 66 | 508 | 407 | 98 |

Tabelle 3

Volumen-, Quetsch- und Quellfaktoren der hochgefüllten Polyurethan(harnstoff)-Trägermassen (Beispiele 1-7)

| Beispiel | F 1 Volumen-Faktor | F 2 Quetsch-Faktor | F3 Quell-Faktor | F4 Suspensions-Faktor | % WAF Wasseraufnahme | % FKS Feststoffgehalt |
|---|---|---|---|---|---|---|
| 1 | 5,5 | 3,4 | 3,8 | 10,6 | 90,3 | 9,7 |
| 2 | 5,6 | 3,6 | 3,8 | 15,4 | 93,6 | 6,4 |
| 3 | 4,6 | 2,7 | 3,1 | 15,1 | 93,2 | 6,8 |
| 4 | 6,2 | 3,6 | 3,8 | 17,0 | 94,1 | 5,9 |
| 5 | 6,6 | 6,5 | 4,2 | 10,5 | 90,5 | 9,5 |
| 6 | 8,3 | 4,2 | 5,4 | 15,3 | 93,5 | 6,5 |
| 7 | 7,7 | 6,1 | 6,2 | 15,4 | 93,5 | 6,5 |
| Mittelwerte x= | 6,4 | 4,3 | 4,3 | 14,2 | 92,7 | 7,3 |
| Unter-Obergrenze | 4,6-8,3 | 2,7-6,5 | 3,1-6,2 | 10,5-17,0 | 90,3-93,6 | 5,9-9,7 |

Fortsetzung Tabellen 2 und 3

Mengenangaben in Gewichtsteilen, jeweils bezogen auf Feststoff.

BK = Braunkohle - getempert, mit einer Restfeuchte von 9 Gew.-% (in Gew.-Teilen Trockensubstanz)

BKK = Braunkohlekoks

AK = Aktivkohle, 50 % unter 4 µm

I = Nichtionisches hydrophiles NCO-Prepolymer

O = Nichtionisches hydrophobes NCO-Prepolymer

BO = Kationenbildendes hydrophobes NCO-Prepolymer

FeI = Ferromagnetisches Eisenoxid ($Fe_3O_4$), Teilchengröße ca. 1 µm

B) Verwendung der Trägermassen im biologischen Reinigungsverfahren (erfindungsgemäß)

B)1. Charakterisierung der angewendeten biologischen Festbett-/Wirbelbett-Apparatur (siehe Fig. 1)

I.) Beschreibung einer kontinuierlich arbeitenden Festbett-Apparatur (siehe Fig. 1) Verfahren I
Hierbei wird das Verfahren in der Festbett-Apparatur als Verfahren Ia) bezeichnet, das Verfahren in der Wirbelbett-Apparatur entsprechend als Verfahren Ib).
Ein Teilstrom des Ablaufes einer ersten Belebungsstufe einer industriellen Großanlage mit CSB-Werten von 350 ± 100 mg/l, gelegentlich ± 250 mg/l, und $BSB_5$-Werten von 23 ± 5 mg/l, gelegentlich ± 15 mg/l wird kontinuierlich mit der Pumpe (1) über die Leitung (2) in die Säule (3) gepumpt. Die Säule wird wie in den Patentbeispielen angegeben mit dem Trägermaterial (4) gefüllt, auf dem sich die Belebtschlammbiomasse ansiedeln soll.
Das zur Begasung und zur Sauerstoffversorgung der Säule notwendige Gas wird durch den Rotameter (5) über die Leitung (6) mit einer Fritte oder Lochplatte (7) der Säule (3) zugeführt. Durch die Zufuhr großer Mengen an sauerstoffhaltigem Gas kann die Säule als Wirbelbett betrieben werden oder bei geringer Gaszufuhr als Festbett. Das sauerstoffhaltige Gas tritt an der Fritte oder Lochplatte (7) in Form kleiner Bläschen aus und durchströmt die Säule (3). Das über die Leitung (2) zugeführte Abwasser durchströmt ebenfalls die Säule (3) auf deren Füllung (4) sich in wenigen Tagen bei den erfindungsgemäßen Trägermaterialien ein biologischer Rasen bildet und tritt danach über den Ablauf (8) der Säule (3) aus. Das behandelte Abwasser wird nach einer durchschnittlichen Verweilzeit von 4 Stunden über die Leitung (8) in einen Klärer (9) eingeleitet. Aus der Säule (3) herausgespülte Teilchen des biologischen Rasens scheiden sich im Klärer ab (9) und können über den Absperrhahn (10) abgezogen werden. Das geklärte Abwasser verläßt den Klärer (9) über die Ablaufleitung (11). Gesamtvolumen der Apparatur: 100 l, Füllgrad mit erfindungsgemäßen Trägermaterial 65 Vol-%. Die mittlere Verweilzeit des Abwassers beträgt 4 Stunden.

II.) Beschreibung einer kontinuierlich arbeitenden Rühr-Apparatur (Fig. 2) (Wirbelbettverfahren)
Ein Teilstrom des Ablaufes einer ersten Belebungsstufe einer industriellen Großanlage (CSB 300-400 mg/l, $BSB_5$ 18-27 mg/l) wird kontinuierlich mit der Pumpe (1) über die Leitung (2) in den Behälter (3) gepumpt. Über den Rotamesser (4) und die Leitung (5) wird mit der Fritte (6) dem Behälter (3) sauerstoffhaltiges Gas zugeführt. Das zu behandelnde Abwasser und das Trägermaterial (7), auf dem die Bakterien wachsen sollen, wird mit dem Rührer (8) in Bewegung gehalten, so daß eine gleichmäßige Verteilung des Trägermaterials und des Belebtschlamms gewährleistet wird. Das durch die Fritte (6) in feinen Blasen austretende Gas wird vom Rührer (8) im Behälter (3) verteilt, wodurch eine ausreichende Sauerstoffversorgung des Behälterinhaltes möglich ist.

Das aus dem Behälter (3) überlaufende, behandelte Abwasser wird durch die Leitung (9) in den Klärer (10) geleitet.
Aus dem Behälter (3) herausgespülter Belebtschlamm (7), der sich im Klärer (10) absetzt, kann mit der Pumpe (11) über die Leitung (12) in den Behälter (3) zurückgeführt oder ausgekreist werden. Das geklärte Abwasser verläßt den Klärer (10) über die Leitung (13).
In den Patentbeispielen wird die kontinuierliche Reinigung in der oben beschriebenen 50 l-Rührapparatur (Füllvolumen 65 Gew.-%) als Reinigungsverfahren 11 bezeichnet. Die mittlere Verweilzeit des Abwassers beträgt 4 Stunden.
Die Abbauergebnisse sind Mittelwerte von jeweils 4 Analysen der zweiten bis dritten Woche nach Beginn der biologischen Reinigung des Abwassers.

Patentbeispiele 8 bis 11

Ergebnisse der aeroben biologischen Abwasserreinigung

| | Nulltest | Beispiele-Nr. | | | |
|---|---|---|---|---|---|
| Patentbeispiel | | 8 | 9 | 10 | 11 |
| Art der biologischen Reinigung | I | I | II | I | I |
| PU-Trägermasse von Patentbeispiel | ohne Träger | 1 | 2 | 6 | 7 |
| CSB-Abbau Ablauf | 435 | 229 | 204 | 243 | 256 |
| Daphnientoxizität bei Verdünnung 1: | 3500 | 410 | 160 | 430 | 520 |
| Geruchsschwellenwert bei Verdünnung 1: | 1400 | 530 | 380 | 560 | 580 |
| Farbaufhellung (Transmission bei nm 600 | 48 | 85 | 89 | 83 | 81 |
| 500 | 34 | 76 | 81 | 73 | 72 |
| 400 | 18 | 55 | 60 | 53 | 51 |

Beispiel 12

Abwässer aus der Chlorbleiche einer Sulfitzellstoffabrik, mit einem CSB-Wert von 3860 mg/l (CSB = Wert des chemischen Sauerstoffbedarfs), wurden in parallel und kontinuierlich betriebenen Anlagen einer anaeroben mikrobiellen Behandlung unterzogen.

Die Versuch wurden in 1,6 l fassenden Anaerobanlagen, wie sie von W.J. Jewell in "Jounal of the Water Pollution Control Federation", Vol. 53, Nr. 4, auf der Seite 484, (Abbildung 1b) beschrieben sind, durchgeführt. Die mittlere hydraulische Verweilzeit des Abwassers im Reaktor betrug 3,33 Tage. Die Abbauversuche wurden in folgenden Varianten durchgeführt:

Anlage 1 (Nulltest ohne Träger als Vergleich)
400 ml suspendierte Zellen
Anlage 2 (erfindungsgemäß)
400 ml suspendierte Zellen und
400 ml anionisch modifizierte, hochgefüllte PUR-Trägermasse von Patentbeispiel 1.

Die Zellen wurden dem Anaerobreaktor einer Zuckerfabrik entnommen.

Nach Erreichen der Gleichgewichtsbedingungen im Reaktor (nach 34 Tagen) wurden folgende Ergebnisse erreicht:

Anlage 1: CSB-Wert im Ablauf 2010 mg/l
Anlage 2: CSP-Wert im Ablauf 802 mg/l.

Der Nulltest bezieht sich auf einen gleichzeitig laufenden Versuch bei der biologischen Abwasserreinigung unter den Bedingungen wie sie bei den Patentbeispielen angewendet werden, jedoch ohne Zusätze der hochgefüllten Polyurethan(harnstoff)-Trägermassen. Zur Art der biologischen Reinigung siehe Verfahren I Festbettmethode und Verfahren II Fließ- und Wirbelbettmethode.

**Patentansprüche**

**1.** Verfahren zur Herstellung von hochwasseraufnahmefähigen, füllstoffhaltigen Polyurethan(harnstoffen) aus NCO-Prepolymeren, Füllstoffen und Wasser sowie gegebenenfalls weiteren Kettenverlängerungsmitteln, dadurch gekennzeichnet, daß man

A) mehrfunktionelle, hydrophile und/- oder hydrophobe NCO-Prepolymere mit einer Gesamt-Funktionalität ≧ 2,1 und einem NCO-Gehalt von 1 bis 12 Gew.-% NCO auf der Basis von

a) zwei- und/oder mehrfunktionellen, hydrophilen und/oder hydrophoben, höhermolekularen Verbindungen mit gegenüber Isocyanaten reaktiven H-Atomen mit Molekulargewichten von 400 bis 10 000,

b) 0 bis 5 Mol pro Mol a) niedermolekularen, zwei- und/oder mehrwertigen Verbindungen des Molekulargewichts 32 bis 399 und gegenüber Isocyanaten reaktiven H-Atomen,

c) gegebenenfalls anionische Gruppen aufweisenden oder anionsche Gruppen bildenden Polyurethan-Ausgangskomponenten mit mindestens einer gegenüber NCO reaktiven, aktiven Wasserstoff tragenden Gruppe und mindestens einer anionische Gruppen aufweisenden oder anionische Gruppen bildenden Gruppe,

d) molar überschüssigen Mengen, bezogen auf a) bis c), an Di- und/oder Polyisocyanaten zur teilweisen oder vollständigen Ausbildung von NCO-Prepolymeren mit NCO-Gehalten von 1 bis 12 Gew.-% NCO, wobei mindestens eine der Komponenten a), b), c) und/oder d), mehr als bifunktionell ist,

gegebenenfalls mit

B) Zusätzen von weiteren niedermolekularen Polyisocyanaten zum NCO-Prepolymer A) in Mengen bis zum halben Gewichtsanteil von A) und bis zur Ausbildung von (A + B)-Mischungen mit NCO-Gehalten ≦ 30 Gew.-% NCO,

C)

a) in überstöchiometrischen Mengen, mindestens die 0,5-fache Gewichtsmenge, bezogen auf Feststoffgehalt von A + B, an Wasser

b) gegebenenfalls in Mischung mit anionische Gruppen aufweisenden oder anionische Gruppen bildenden Verbindungen mit mindestens einer gegenüber NCO reaktiven, aktiven Wasserstoff tragenden Gruppe und mindestens einer anionischen Gruppe bzw. anionische Gruppen bildenden Gruppe, gegebenenfalls weiteren Polyaminen, wobei diese Verbindungen b) vorzugsweise bis maximal 50 Äquivalent-% der NCO-Gruppen in A/B verwendet werden.

D) mit Füllstoffen auf Basis von feinteiligen oder stückigen, vorgefertigten Schaumstoffteilchen und/oder fossilen Lignozellulosen und/oder Kohlepulvern in Mengen von 5 bis 97 Gew.-%, bezogen auf die füllstoffhaltigen Polyurethanharnstoffmassen (als Trockensubstanz)

und gegebenenfalls

E) in Gegenwart von weiteren anorganischen und/oder organischen Füllstoffen und üblichen Zusatzstoffen, Katalysatoren und Hilfsmitteln der Polyurethanchemie,

zu füllstoffhaltigen, hochwasseraufnahmefähigen, in wäßrigem Milieu abriebfesten, stark quellfähigen, feinteiligen bzw. stückigen Polyrethan(harnstoff)-Massen mit hoher Oberfläche und einem Wert der Wasseraufnahmefähigkeit (WAF-Wert) von $\geqq$ 33 Gew.-% bis 97 Gew.-%, bezogen auf wassergequollene, füllstoffhaltige Polyurethan(harnstoff)-Suspensionen ohne überstehendes Wasser, umsetzt, wobei Art und Mengen der Komponenten A c) und C b) so gewählt sind, daß ein Gehalt an anionischen Gruppen von 10 bis 3000 Milliäquivalenten anionischer oder anionbildender Gruppen pro 1000 g wasser- und füllstofffreier Polyurethan(harnstoff)-Masse im Überschuß zu ggf. vorhandenen Kationengruppen resultiert.

2. Verfahren nach Anspruch 1, dadurch gekennzeichnet, daß man als Füllstoff D) vorgefertigte PUR-Schaumstoffteilchen verwendet.

3. Verfahren nach Anspruch 1, dadurch gekennzeichnet, daß man als Füllstoffe D) fossile Lignozellulosen auf Basis von Braunkohlenpulver oder Torf verwendet.

4. Verfahren nach Anspruch 1, dadurch gekennzeichnet, daß man als Füllstoffe D) Kohlepulver auf Basis Aktivkohle und/oder Braunkohlenkoks verwendet.

5. Verfahren nach Ansprüchen 1 bis 3, dadurch gekennzeichnet, daß man als Füllstoffe D) vorgefertigte PUR-Schaumstoffteilchen und fossile Lignozellulosen auf Basis von Braunkohlenpulver oder Torf, gegebenenfalls unter weiterem Zusatz von Kohlepulvern verwendet.

6. Verfahren nach Ansprüchen 1 bis 5, dadurch gekennzeichnet, daß man als Komponente A c) Diolsulfonate, Diolcarbonsäuren bzw. Diolcarboxylate und/oder als Komponente C b) Diaminosulfonsäuren oder Diaminocarbonsäuren oder ihre Alkali-, Ammonium- oder Aminsalze einsetzt, so daß der Gehalt an anionischen oder anionbildenden Gruppen 30 bis 1500 Milliäquivalente pro 1000 g wasser- und füllstofffreier Polyurethan(harnstoff)-Masse im Überschuß zu ggf. vorhandenen Kationengruppen beträgt.

7. Verfahren nach Ansprüchen 1 bis 6, dadurch gekennzeichnet, daß man als höhermolekulare Verbindungen mit gegenüber NCO-reaktiven H-Atome Aa) höhermolekulare Polyole mit einer Gesamtfunktionalität >2,1, insbesondere höhermolekularer Polyetherpolyole mit weniger als 20 Gew.-% Oxyethylengruppen verwendet.

8. Nach den Verfahren 1 bis 7 zugängliche, füllstoffhaltige, hochwasseraufnahmefähigePolyurethan(harnstoff)-Massen, gekennzeichnet insbesondere durch einen Füllstoffgehalt von 5 bis 97 Gew.-% an Schaumstoffteilchen und/oder fossilen Lignozellulosen und/oder Kohlepulvern, einen Gehalt von 10 bis 3000 Milliäquivalenten anionischer oder anionische Gruppen bildender Gruppen pro 1000 g wasser- oder füllstofffreier PU(harnstoff)-Masse im Überschuß zu ggf. vorhandenen Kationengruppen und eine Wasseraufnahmefähigkeit von 30 bis 97 Gew.-% Wasser, bezogen auf wassergequollene, füllstoffhaltige Polyurethan(harnstoff)-Suspension.

9. Verwendung der hochgefüllten, hochwasseraufnahmefähigen, anionisch modifizierten Polyurethan(harnstoff)-Trägermassen nach Ansprüchen 1 bis 8, welche als Füllstoffe 5 bis 97 Gew.-% Schaumstoffteilchen und/oder feinteilige Lignozellulosen, insbesondere Braunkohle oder Torf, und/oder Kohlen wie Aktivkohle oder Braunkohlenkoks, sowie gegebenenfalls weitere Füllstoffe enthalten, als Träger für inkorporierte oder bevorzugt aufwachsende Biomassen bei der Abwasserreinigung, insbesondere bei der biologischen Abwasserreinigung, als Träger bei der biologischen Fermentation in Biokonversionsprozessen, als Träger für Pflanzenwachstum oder als Adsorbentien für feinsuspendierte Stoffe und/oder Rohöl.

10. Verwendung von Polyurethan(harnstoff)-Massen nach Anspruch 9 als Träger für Biomassen zur biologischen Abwasserreinigung, dadurch gekennzeichnet, daß man nach Verfahren 1 bis 7 erhältliche, hochwasseraufnehmende, hochgefüllte, anionische modifizierte Polyurethan(harnstoff)-Massen mit einem Gehalt an anionischen oder anionische Gruppen bildenden Gruppen von 10 bis 3000, vorzugsweise 30 bis 1500 Milliäquivalenten pro 1 000 g wasser- und füllstofffreier Polyurethanmatrix im Überschuß

zu ggf. vorhandenen Kationengruppen mit einem Gehalt an Füllstoffen von 15 bis 97 Gew.-%, bezogen auf den wasserfreien Gehalt an füllstofffhaltigen Polyurethanen, und mit einer Wasseraufnahmefähigkeit von 33 bis 97 Gew.-% Wasser, wobei als Füllstoffe zellige Kunststoffteilchen, insbesondere feinteilige oder stückige Polyurethanschaumstoffteilchen und/oder feinteilige fossile Lignozellulosen oder deren Folgeprodukte enthaltende Naturstoffe, insbesondere Braunkohlenpulver oder Torf und/oder Kohlepulver, und gegebenenfalls weitere organische oder anorganische bzw. metallische Füllstoffe eingesetzt werden und wobei hydrophile und/oder hydrophobe Polyurethan(harnstoffe), welche anionische Gruppen oder anionische Gruppen bildende Gruppen enthalten, als die Füllstoffe bindende Matrix dienen, als Träger für Biomassen in der Klärflüssigkeit bei der Abwasserreinigung in einer Menge von mindestens 0,5 g Träger-Trockenmasse pro Liter Klärflüssigkeit einsetzt.

## Claims

1. A process for the production of highly water-absorbing, filler-containing polyurethane(ureas) of NCO prepolymers, fillers and water and, optionally, other chain-extending agents, characterized in that

   A) polyfunctional, hydrophilic and/or hydrophobic NCO prepolymers having an overall functionality of ≧ 2.1 and an NCO content of 1 to 12% by weight NCO based on

      a) difunctional and/or polyfunctional, hydrophilic and/or hydrophobic, relatively high molecular weight compounds containing isocyanate-reactive hydrogen atoms and having molecular weights of 400 to 10,000,

      b) 0 to 5 mol per mol a) low molecular weight, difunctional and/or polyfunctional compounds containing isocyanate-reactive H atoms and having a molecular weight in the range from 32 to 399,

      c) polyurethane starting components optionally containing, or forming, anionic groups and bearing at least one NCO-reactive group containing active hydrogen and at least one group containing, or forming, anionic groups,

      d) excess molar quantities, based on a) to c), of diisocyanates and/or polyisocyanates for the partial or complete formation of NCO prepolymers having NCO contents of 1 to 12% by weight NCO, at least one of components a), b), c) and/or d) having a functionality of more than 2,

   optionally with

   B) additions of other low molecular weight polyisocyanates to the NCO prepolymer A) in quantities of up to half the percentage by weight of A) and up to the formation of (A + B) mixtures having NCO contents of ≦ 30% by weight NCO,

   C)

      a) in overstoichiometric quantities, at least 0.5 times the quantity by weight, based on the solids content of A + B, of water

      b) optionally in admixture with compounds containing, or forming, anionic groups bearing at least one NCO-reactive active group containing active hydrogen and at least one anionic group or a group forming anionic groups and optionally other polyamines, these compounds b) preferably being used in a quantity of up to at most 50 equivalent-% of the NCO groups in A/B,

   are reacted

   D) with fillers based on finely divided or fine-particle, preformed foam particles and/or fossil lignocelluloses and/or carbon powders in quantities of 5 to 97% by weight, based on the filler-containing polyurethane urea compositions (as dry matter) and, optionally,

   E) in the presence of other inorganic and/or organic fillers and typical additives, catalysts and auxiliaries of polyurethane chemistry,

   to form filler-containing, highly water-absorbing, highly swellable, finely divided or particulate polyurethane(urea) compositions which are resistant to abrasion in aqueous medium and which have a large surface and a water absorbtion value (WA value) of ≧ 33% by weight to 97% by weight, based on water-swollen, filler-containing polyurethane(urea) suspensions without supernatant water, the type and quantities of components A c) and C b) being selected so that a content of anionic groups of 10 to 300 milli-equivalents of anionic or anion-forming groups per 1,000 g water-free and filler-free polyurethane-(urea) composition in excess to any cationic groups which may be present is obtained.

2. A process as claimed in claim 1, characterized in that preformed PUR foam particles are used as the filler D).

3. A process as claimed in claim 1, characterized in that fossil lignocelluloses based on lignite powder or

peat are used as the fillers D).

4. A process as claimed in claim 1, characterized in that carbon powders based on active carbon and/or lignite coke are used as the fillers D).

5. A process as claimed in claims 1 to 3, characterized in that preformed PUR foam particles and fossil lignocelluloses based on lignite powder or peat, optionally with further addition of carbon powders, are used as the fillers D).

6. A process as claimed in claims 1 to 5, characterized in that diol sulfonates, diol carboxylic acids or diol carboxylates are used as component A c) while diaminosulfonic acids or diaminocarboxylic acids or their alkali, ammonium or amine salts are used as component C b) so that the content of anionic or anion-forming groups is from 30 to 1,500 milliequivalents per 1,000 g water-free and filler-free polyurethane(urea) composition in excess to any cationic groups present.

7. A process as claimed in claims 1 to 6, characterized in that relatively high molecular weight polyols having an overall functionality of ≧ 2.1, more particularly relatively high molecular weight polyether polyols containing less than 20% by weight oxyethylene groups, are used as the relatively high molecular weight compounds containing NCO-reactive H atoms A a).

8. Filler-containing highly water-absorbing polyurethane(urea) compositions, characterized in particular by a filler content of 5 to 97% by weight foam particles and/or fossil lignocelluloses and/or carbon powders, a content of 10 to 3,000 milliequivalents anionic groups or groups forming anionic groups per 1,000 g water-free or filler-free PU(urea) composition in excess to any cationic groups present and a water absorption capacity of 30 to 97% by weight water, based on water-swollen, filler-containing polyurethane(urea) suspension.

9. The use of the highly filled, highly water-absorbing, anionically modified polyurethane(urea) support materials claimed in claims 1 to 8 containing as fillers from 5 to 97% by weight foam particles and/or finely divided lignocelluloses, more particularly lignite or peat and/or carbons, such as active carbon or lignite coke, and optionally other fillers as supports for incorporated or, preferably, growing biomasses in the purification of wastewaters, more particularly in the biological purification of wastewaters, as biological fermentation supports in bioconversion processes, as plant growth supports or as adsorbents for finely suspended substances and/or crude oil.

10. The use of polyurethane(urea) compositions as claimed in claim 9 as supports for biomasses for the biological purification of wastewaters, characterized in that highly water-absorbing, highly filled, anionically modified polyurethane(urea) compositions obtainable by the process claimed in claims 1 to 7 having a content of anionic groups or groups forming anionic groups of 10 to 3,000 milliequivalents and preferably 30 to 1,500 milliequivalents per 1,000 g water-free and filler-free polyurethane matrix in excess to any cationic groups present, a filler content of 15 to 97% by weight, based on the water-free content of filler-containing polyurethanes and a water absorption capacity of 33 to 97% by weight water, the fillers used being cellular plastic particles, more particularly finely divided or particulate polyurethane foams and/or finely divided fossil lignocelluloses or natural products containing derivatives thereof, more particularly lignite powder or peat and/or carbon powder, and optionally other organic or inorganic or metallic fillers and hydrophilic and hydrophobic polyurethane(ureas) containing anionic groups or groups forming anionic groups, which serve as matrix for binding the fillers, being used as supports for biomasses in the clear liquid in the purification of wastewaters in a quantity of at least 0.5 g support dry matter per litre clear liquid.

**Revendications**

1. Procédé de préparation de polyuréthannes-(urées) contenant des matières de charge, à forte capacité d'absorption de l'eau, à partir de prépolymères à groupes NCO, de matières de charge, d'eau et le cas échéant d'autres agents d'allongement des chaînes,
caractérisé en ce que l'on fait réagir
A) des prépolymères à groupes NCO polyfonctionnels, hydrophiles et/ou hydrophobes, à une fonctionnalité totale supérieure ou égale à 2,1 et une teneur en NCO de 1 à 12 % en poids, à base

de

a) des composés à haut poids moléculaire di- et/ou polyfonctionnels, hydrophiles et/ou hydrophobes, contenant des atomes d'hyrogène réactifs avec les isocyanates, à des poids moléculaires de 400 à 10 000,

b) 0 à 5 mol, par mole de a), de composés à bas poids moléculaire, di- et/ou polyvalents, de poids moléculaire 32 à 399, contenant des atomes d'hydrogène réactifs avec les isocyanates,

c) des composants de départ de la formation de polyuréthannes, contenant le cas échéant des groupes anioniques ou formant des groupes anioniques, avec au moins un groupe contenant de l'hydrogène actif, réactif avec les groupes NCO, et au moins un groupe contenant des groupes anioniques ou formant des groupes anioniques.

d) un excès molaire, par rapport à à c), de di- et/ou poly-isocyanates pour formation partielle ou complète de prépolymères à groupes NCO à des teneurs en NCO de 1 à 12 % en poids, l'un au moins des composants a), b), c) et/ou d) devant avoir une fonctionnalité supérieure à 2,

le cas échéant avec

B) des adjonctions d'autres polyisocyanates à bas poids moléculaire au prépolymère à groupes NCO A), en quantité allant jusqu'à la moitié du poids de A) et jusqu'à la formation de mélanges (A + B) à des teneurs en NCO inférieures ou égales à 30 % en poids,

C)

a) un excès d'au moins 50 % en poids, par rapport aux matières solides de A + B, d'eau,

b) éventuellement en mélange avec des composés contenant des groupes anioniques ou formant des groupes anioniques, avec au moins un groupe contenant de l'hydrogène actif, réactif avec les groupes NCO, et au moins un groupe anionique ou un groupe formant des groupes anioniques, éventuellement d'autres polyamines, ces composés b) étant utilisés de préférence en quantité maximale de 50 équivalents % des groupes NCO contenus dans A/B,

D) avec des matières de charge à base de particules de mousse formée au préalable, en fines particules ou en morceaux, et/ou de lignocelluloses fossiles et/ou de poudres de charbon, en quantité de 5 à 97 % en poids, par rapport aux masses de polyuréthannes-(urées) contenant des matières de charge (en matières sèches) et le cas échéant

E) en présence d'autres matières de charge minérales et/ou organiques, et d'additifs, catalyseurs et produits auxiliaires usuels de la chimie des polyuréthannes, avec formation de masses de polyuréthannes-(urées) en fines particules ou en morceaux, contenant des matières de charge, à forte capacité d'absorption de l'eau, résistant à l'abrasion en milieu aqueux, fortement gonflables, à haute surface et avec une valeur de la capacité d'absorption de l'eau (valeur CAE) supérieure ou égale à 33 % en poids et allant jusqu'à 97 % en poids, par rapport aux suspensions de polyuréthannes-(urées) contenant les matières de charge et gonflées par l'eau, sans l'eau surnageante, la nature et les quantités des composants Ac) et Cb) étant choisies de manière à parvenir à une teneur en groupes anioniques de 10 à 3 000 milliéquivalents de groupes anioniques ou formant des anions pour 1 000 g de masse de polyuréthannes-(urées) sèches et sans les matières de charge, en excès par rapport aux groupes cationiques éventuellement présents.

**2.** Procédé selon la revendication 1, caractérisé en ce que l'on utilise en tant que matière de charge D) une mousse de polyuréthanne formée au préalable, à l'état de particules.

**3.** Procédé selon la revendication 1, caractérisé en ce que l'on utilise en tant que matières de charge D) des lignocelluloses fossiles à base de poudre de lignite ou de tourbe.

**4.** Procédé selon la revendication 1, caractérisé en ce que l'on utilise en tant que matières de charge D) des poudres de charbon à base de charbon actif et/ou de coke de lignite.

**5.** Procédé selon les revendications 1 à 3, caractérisé en ce que l'on utilise en tant que matières de charge D) des mousses de polyuréthanne formées au préalable, à l'état de particules, et des lignocelluloses fossiles à base de poudre de lignite ou de tourbe, éventuellement avec adjonction de poudres de charbon.

**6.** Procédé selon les revendications 1 à 5, caractérisé en ce que l'on utilise en tant que composant Ac) des diol-sulfonates, des acides diol-carboxyliques ou diol-carboxylates et/ou en tant que composant Cb) des acides diaminosulfoniques ou des acides diaminocarboxyliques ou leurs sels alcalins, d'ammonium ou d'amines, en sorte que la teneur en groupes anioniques ou formant des anions soit de 30 à 1

500 milliéquivalents pour 1 000 g de masse de polyuréthanne-(urée) anhydre et exempte de matière de charge, en excès par rapport aux groupes cationiques éventuellement présents.

**7.** Procédé selon les revendications 1 à 6, caractérisé en ce que l'on utilise en tant que composés à haut poids moléculaire portant des atomes d'hydrogène réactifs avec les groupes NCO Aa) des polyols à haut poids moléculaire ayant une fonctionnalité totale supérieure à 2,1, en particulier des polyétherpolyols à haut poids moléculaire contenant moins de 20 % en poids de groupes oxyéthylène.

**8.** Les masses de polyuréthannes-(urées) contenant des matières de charge, à haute capacité d'absorption de l'eau, obtenues par les procédés des revendications 1 à 7, et caractérisées en particulier par une teneur en matières de charge de 5 à 97 % en poids de particules de mousse et/ou de lignocelluloses fossiles et/ou de poudres de charbon, une teneur de 10 à 3 000 milliéquivalents de groupes anioniques ou de groupes formant des groupes anioniques pour 1 000 g de la masse de polyuréthanne-(urée) anhydre et sans matière de charge, en excès par rapport aux groupes cationiques éventuellement présents, et une capacité d'absorption de l'eau de 30 à 97 % en poids d'eau, par rapport à la suspension de polyuréthanne-(urée) contenant les matières de charge, et gonflée par l'eau.

**9.** Utilisation des masses de support en polyuréthannes-(urées) à modification anionique, fortement chargées, à haute capacité d'absorption de l'eau, selon les revendications 1 à 8, contenant en tant que matières de charge 5 à 97 % en poids de particules de mousse et/ou de lignocelluloses en fines particules, en particulier de lignite ou de tourbe, et/ou de charbons tels que du charbon actif ou du coke de lignite, et le cas échéant d'autres matières de charge, en tant que supports pour des biomasses incorporées ou de préférence en croissance à l'épuration des eaux résiduaires, en particulier à l'épuration biologique des eaux résiduaires, en tant que supports à la fermentation biologique dans des opérations de bioconversion, en tant que supports pour la croissance de végétaux ou en tant qu'adsorbants pour des matières en fines suspensions et/ou du pétrole brut.

**10.** Utilisation des masses de polyuréthannes-(urées) selon la revendication 9, en tant que supports pour des biomasses pour l'épuration biologique des eaux résiduaires, caractérisée en ce que l'on utilise des masses de polyuréthannes-(urées) à modification anionique, fortement chargées, à haute capacité d'absorption de l'eau, obtenues par les procédés 1 à 7, à une teneur en groupes anioniques ou en groupes formant des groupes anioniques de 10 à 3 000, de préférence de 30 à 1 500 milliéquivalents pour 1 000 g de la gangue de polyuréthanne anhydre et sans les matières de charge, en excès par rapport aux groupes cationiques éventuellement présents, à une teneur en matières de charge de 15 à 97 % en poids, par rapport aux matières sèches des polyuréthannes contenant des matières de charge, et avec une capacité d'absorption de l'eau de 33 à 97 % en poids d'eau, les matières de charge étant des particules de résines synthétiques alvéolaires, en particulier des fines particules ou des morceaux de mousse de polyuréthanne, et/ou des lignocelluloses fossiles en fines particules ou des produits naturels contenant leurs dérivés, en particulier de la poudre de lignite ou de la tourbe et/ou des poudres de charbon, et le cas échéant d'autres matières de charge organiques, minérales ou métalliques, les polyuréthannes-(urées) hydrophiles et/ou hydrophobes, contenant des groupes anioniques ou des groupes formant des groupes anioniques, servant de gangue liant les matières de charge, en tant que supports pour des biomasses dans le liquide à clarifier à l'épuration d'eaux résiduaires, en quantité d'au moins 0,5 g de masses sèches du support par litre du liquide à clarifier.

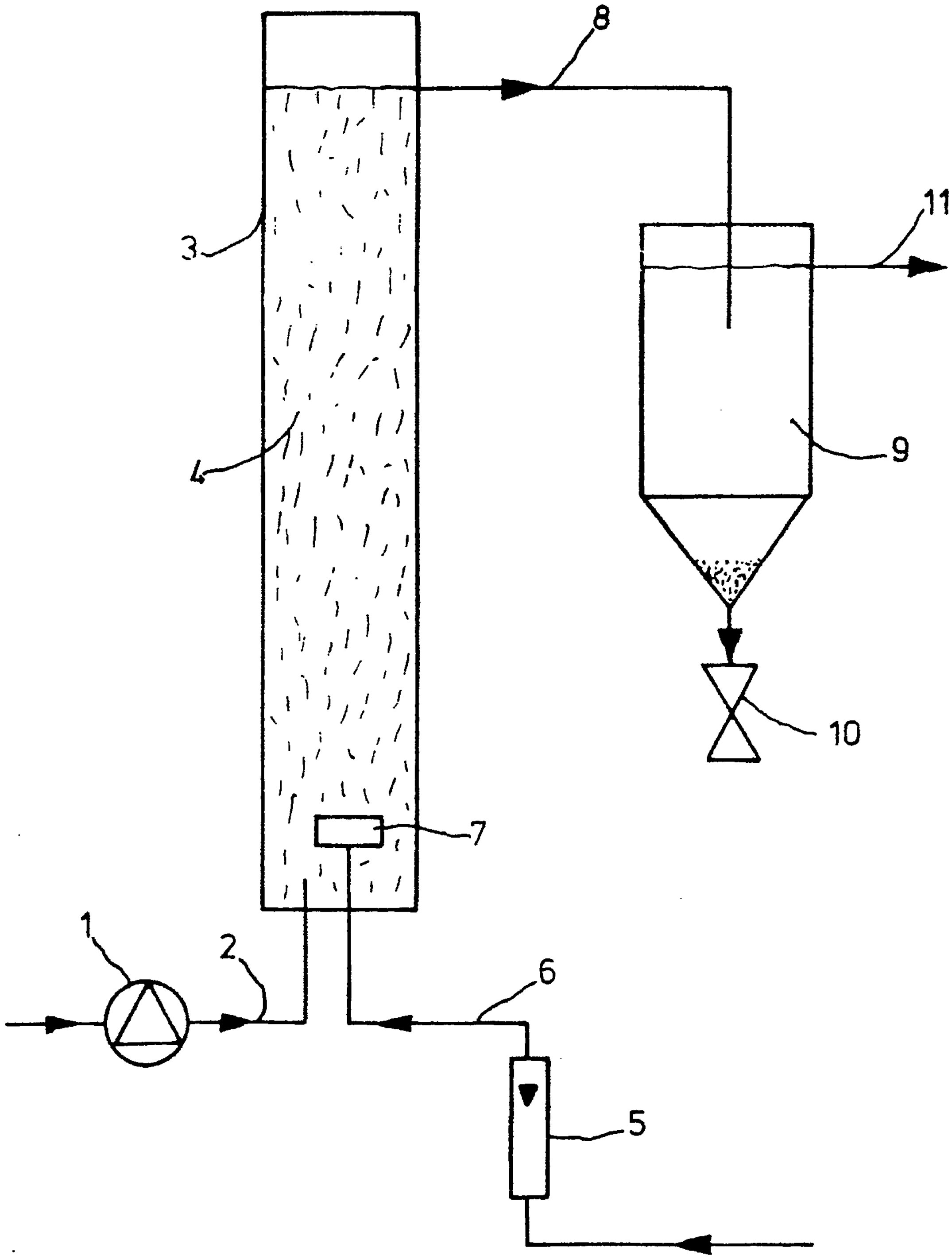


FIG. 1

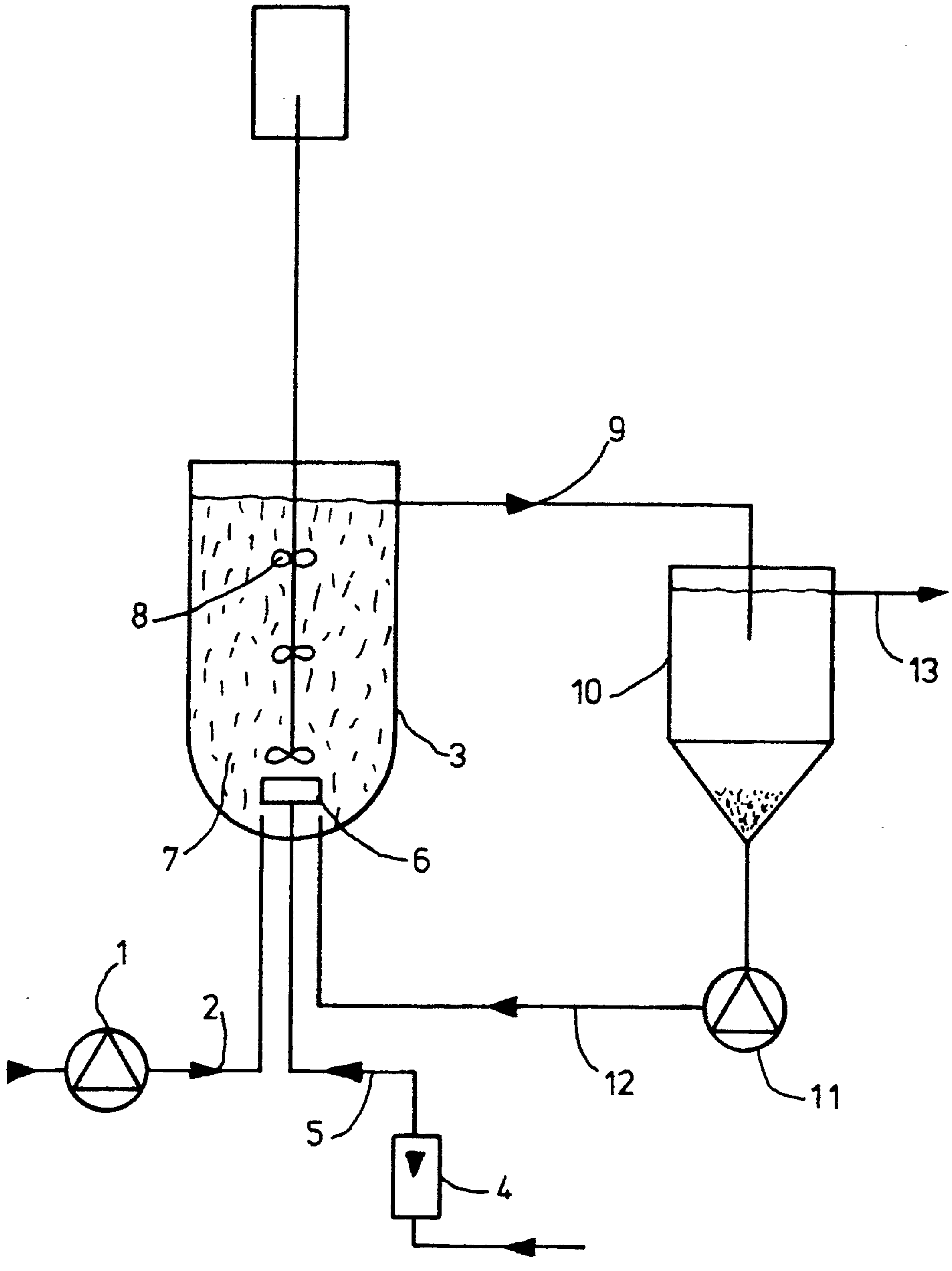


FIG. 2